# EUROPEAN PATENT APPLICATION

(11) **EP 4 790 920 A1**
(43) Date of publication of application: **12.08.2026**
(21) Application number: 24881230.7
(22) Date of filing: 23.08.2024
(51) Int. Cl.: H04B 10/071

(54) **SIGNAL RECEIVING APPARATUS, SIGNAL TRANSMITTING APPARATUS, AND OPTICAL FIBER SENSING APPARATUS**

(30) Priority: 27.10.2023 CN 202311426488
(71) Applicant: HUAWEI TECHNOLOGIES CO., LTD., Shenzhen, Guangdong 518129 (CN)
(72) Inventor: ZHAO, Yan, Shenzhen, Guangdong 518129 (CN); HAN, Liqi, Shenzhen, Guangdong 518129 (CN); QIAO, Wei, Shenzhen, Guangdong 518129 (CN)
(74) Representative: Gill Jennings & Every LLP
(86) International application number: PCT/CN2024/114242
(87) International publication number: WO 2025/086862

(57) **Abstract**

This application relates to the field of optical fiber sensing technologies, and provides a signal receiving apparatus, a signal transmitting apparatus, and an optical fiber sensing apparatus, to alleviate a problem that a current optical fiber sensing apparatus has a high requirement on a device when simultaneously detecting Rayleigh scattering and Brillouin scattering. The signal receiving apparatus includes a coherent receiver, a radio frequency analog-to-digital conversion unit, and a frequency band calculation unit. The coherent receiver is configured to obtain four in-phase and quadrature electrical signals based on local oscillator light and signal light. The radio frequency analog-to-digital conversion unit converts the four electrical signals to obtain two digital signals in a first polarization state and two digital signals in a second polarization state. The frequency band calculation unit is configured to compute a spectrum of the signal light based on the two digital signals in the first polarization state of the signal light and the two digital signals in the second polarization state of the signal light, and the spectrum includes a φOTDR signal at a positive frequency and a BOTDR signal at a negative frequency.

## Description

This application claims priority to Chinese Patent Application No. 202311426488.X, filed with the China National Intellectual Property Administration on October 27, 2023 and entitled "SIGNAL RECEIVING APPARATUS, SIGNAL TRANSMITTING APPARATUS, AND OPTICAL FIBER SENSING APPARATUS", which is incorporated herein by reference in its entirety.

### TECHNICAL FIELD

This application relates to the field of distributed optical fiber sensing technologies, and in particular, to a signal receiving apparatus, a signal transmitting apparatus, and an optical fiber sensing apparatus.

### BACKGROUND

When optical fibers are affected by external environment (for example, temperature, stress, and vibration), parameters such as intensity, phases, and frequencies of light transmitted over the optical fibers change accordingly. Corresponding physical parameters can be obtained by detecting these parameters of the transmitted light. This technology is referred to as an optical fiber sensing technology. In a distributed optical fiber sensing technology, optical fibers are used as a sensor to obtain information such as temperature, stress, and vibration on paths of the optical fiber by measuring intensity, phases, and frequency shifts of scattered light at each point on the optical fibers, so as to monitor these physical parameters.

The integration of a phase-sensitive optical time-domain reflectometer and a Brillouin optical time-domain reflectometer is an implementation form of multi-parameter sensing. By simultaneously detecting Rayleigh scattering and Brillouin scattering, so that the integration form can implement sensing of vibration, temperature, and stress. However, detection performance for the simultaneous detection of the integration form of Rayleigh scattering and Brillouin scattering raises stringent requirements on receiver bandwidth and other aspects.

### SUMMARY

This application provides a signal receiving apparatus, a signal transmitting apparatus, an optical fiber sensing apparatus, and a signal processing method applied to the optical fiber sensing apparatus, to alleviate a problem that a current optical fiber sensing apparatus has a high requirement on a device when simultaneously detecting Rayleigh scattering and Brillouin scattering.

According to a first aspect, a signal receiving apparatus is provided, including a coherent receiver, a radio frequency analog-to-digital conversion unit, and a frequency band calculation unit. The coherent receiver is configured to obtain four quadrature electrical signals based on local oscillator light and signal light generated in an optical fiber under test, where the four quadrature electrical signals include two quadrature electrical signals in a first polarization state and two quadrature electrical signals in a second polarization state. Herein, the quadrature of the two electrical signals means that the two electrical signals have a same frequency and a phase difference of π/2, that is, in-phase and quadrature. This is the same for a quadrature signal mentioned subsequently, and details are not described again. The radio frequency analog-to-digital conversion unit is configured to convert the four electrical signals to obtain two digital signals in the first polarization state and two digital signals in the second polarization state. The frequency band calculation unit is configured to compute a spectrum of the signal light based on the two digital signals in the first polarization state and the two digital signals in the second polarization state, where the spectrum includes a first detection signal at a positive frequency and a second detection signal at a negative frequency.

According to the signal receiving apparatus provided in this embodiment of this application, the coherent receiver receives the signal light, to obtain the two quadrature electrical signals *X_{I}* and *X_{Q}* in the first polarization state of the signal light and the two quadrature electrical signals *Y_{I}* and *Y_{Q}* in the second polarization state of the signal light based on the signal light and the local oscillator light. After the radio frequency analog-to-digital conversion unit converts the four quadrature electrical signals into the digital signals, and after the frequency band calculation unit performs frequency band calculation on the four digital signals *X_{I}*, *X_{Q}*, *Y_{I}*, and *Y_{Q}*, the spectrum including the first detection signal at the positive frequency and the second detection signal at the negative frequency may be obtained. For example, the first detection signal may be a φOTDR signal, and the second detection signal may be a BOTDR signal. On this basis, a frequency of probe light may be adjusted, so that a frequency of the first detection signal at the positive frequency can be near a central sampling frequency (positive frequency) of the analog-to-digital converter, and a frequency of the second detection signal at the negative frequency is distributed near a central sampling frequency (negative frequency) of the analog-to-digital converter. In this way, the first detection signal may be sampled at the positive frequency and the second detection signal may be sampled at the negative frequency respectively via ADCs of a same type, so that a set of transceiver apparatuses can receive both the BOTDR signal and the φOTDR signal, to monitor a plurality of parameters such as vibration, temperature, and strain. Compared with a conventional optical fiber sensing apparatus, the solution provided in this embodiment of this application can reduce a requirement on frequency coverage of the coherent receiver, the ADC, and the like in the signal receiving apparatus. For example, the conventional optical fiber sensing apparatus samples a first detection signal and a second detection signal at a positive frequency, and has a high requirement on frequency coverage. In the solution provided in this application, the first detection signal is sampled at the positive frequency, and the second detection signal is sampled at the negative frequency, so that the requirement on the frequency coverage of the coherent receiver and the ADC in the signal receiving apparatus can be reduced by half.

In a possible implementation, the coherent receiver includes four output ends, the radio frequency analog-to-digital conversion unit includes four radio frequency analog-to-digital converters, and the four radio frequency analog-to-digital converters are connected to the four output ends of the coherent receiver in one-to-one correspondence; the radio frequency analog-to-digital converter includes a numerically controlled oscillator, a first frequency mixer, a first filter, and a first analog-to-digital converter, an output end of the numerically controlled oscillator is connected to a first input end of the first frequency mixer, a second input end of the first frequency mixer is connected to an output end of the coherent receiver, an output end of the first frequency mixer is connected to an input end of the first filter, an output end of the first filter is connected to an input end of the first analog-to-digital converter, and an output end of the first analog-to-digital converter is connected to the frequency band calculation unit; and the numerically controlled oscillator is configured to generate a radio frequency signal at a first frequency, the first frequency mixer is configured to perform frequency mixing on an electrical signal and the radio frequency signal whose frequency is the first frequency, the first filter is configured to filter out a high-frequency component in a frequency-mixed signal, to convert the electrical signal into baseband, and the first analog-to-digital converter is configured to convert the baseband-converted electrical signal into a digital signal, where a central sampling frequency of the first analog-to-digital converter is the first frequency. The radio frequency signal is down-converted to near baseband for sampling, so that a requirement on performance of the analog-to-digital converter can be reduced.

In a possible implementation, the radio frequency analog-to-digital converter further includes a 90° phase shifter, a second frequency mixer, a second filter, and a second analog-to-digital converter; the output end of the numerically controlled oscillator is further connected to an input end of the 90° phase shifter, an output end of the 90° phase shifter is connected to a first input end of the second frequency mixer, a second input end of the second frequency mixer is connected to the output end of the coherent receiver, an output end of the second frequency mixer is connected to an input end of the second filter, an output end of the second filter is connected to an input end of the second analog-to-digital converter, and an output end of the second analog-to-digital converter is connected to the frequency band calculation unit; and the numerically controlled oscillator is configured to generate the radio frequency signal at the first frequency, the 90° phase shifter is configured to shift a phase of the radio frequency signal by 90°, the frequency mixer is configured to perform frequency mixing on the electrical signal output by the coherent receiver and the phase-shifted radio frequency signal, the second filter is configured to filter out a high-frequency component in a frequency-mixed signal, to convert the electrical signal into baseband, and the second analog-to-digital converter is configured to convert the baseband-converted electrical signal into a digital signal, where a central sampling frequency of the second analog-to-digital converter is the first frequency. Each analog signal output by the coherent receiver is collected via two ADCs, and the two ADCs respectively collect an in-phase (I) signal and a quadrature (Q) signal. Compared with using only one ADC to collect the I signal, using the two ADCs to respectively collect the I signal and the Q signal can double a frequency range of the collected signal, thereby reducing a requirement on a sampling bandwidth of the ADC.

In a possible implementation, for example, the first detection signal is a phase-sensitive optical time-domain reflectometer φOTDR signal, and the second detection signal is a Brillouin optical time-domain reflectometer BOTDR signal.

In a possible implementation, the first detection signal and the second detection signal are detection signals generated through scattering of a same probe light pulse, or the first detection signal and the second detection signal are detection signals generated from different probe light pulses. If the first detection signal and the second detection signal are detection signals generated through scattering of a same probe light pulse, a frequency difference between the first detection signal and the second detection signal is about a Brillouin frequency shift (vB). If the first detection signal and the second detection signal need to be sampled respectively via ADCs of a same type, the second detection signal and the first detection signal are sampled respectively at a negative frequency (-vB) and at a positive frequency (vB) only when a central sampling frequency of the ADC is near vB, and a range in which the sampling frequency of the ADC can be adjusted is limited. However, when the first detection signal and the second detection signal are detection signals generated through scattering of different probe light pulses, for example, the first detection signal is generated from a first probe light pulse, and the second detection signal is generated from a second probe light pulse, there is no limitation on a frequency difference between the first detection signal and the second detection signal, so that frequency distribution of the first detection signal and frequency distribution of the second detection signal can be adjusted by adjusting frequencies of the first probe light pulse and the second probe light pulse, and therefore the sampling frequency of the ADC may be adjusted flexibly.

In a possible implementation, the signal receiving apparatus further includes a signal quality calculation unit, and the signal quality calculation unit is configured to determine fitting precision of the BOTDR signal and phase noise of the φOTDR signal.

According to a second aspect, a signal transmitting apparatus is provided, where the signal transmitting apparatus includes a laser, a coupler, a first radio frequency transmitting unit, a quadrature modulator, and an optical fiber circulator; the laser is configured to emit an optical signal, where the optical signal emitted by the laser is coupled into two optical signals by the coupler, one optical signal is transmitted to the quadrature modulator as probe light, and the other optical signal is transmitted to a coherent receiver as local oscillator light; the first radio frequency transmitting unit is configured to generate a first radio frequency signal and a second radio frequency signal whose frequencies are a second frequency and that are quadrature; the quadrature modulator is configured to modulate the first radio frequency signal and the second radio frequency signal that are quadrature onto the probe light in a first polarization state, to obtain a probe light pulse signal; and the optical fiber circulator is configured to connect an optical fiber under test, the optical fiber circulator is configured to input the probe light pulse signal into the optical fiber under test, and the optical fiber circulator is further configured to output signal light generated in the optical fiber under test.

In a possible implementation, the signal transmitting apparatus further includes a second transmitting unit; the second radio frequency transmitting unit is configured to generate a third radio frequency signal and a fourth radio frequency signal whose frequencies are a third frequency and that are quadrature, and the probe light output by the quadrature modulator has two polarization states; and the quadrature modulator is further configured to modulate the third radio frequency signal and the fourth radio frequency signal that are quadrature onto the probe light in a second polarization state.

According to the solution provided in this embodiment of this application, radio frequency signals at different frequencies may be separately modulated onto probe light in two polarization states, and the two polarization states do not affect each other. A first detection signal generated from a pulse in the first polarization state and a second detection signal generated from a pulse in the second polarization state may be collected. In this way, a frequency distribution range of the first detection signal and a frequency distribution range of the second detection signal may be flexibly adjusted by respectively adjusting the second frequency and the third frequency, and a frequency of the first detection signal and a frequency of the second detection signal can be flexibly adjusted to adapt to different operating frequency bands of the signal receiving apparatus.

In a possible implementation, the first radio frequency transmitting unit is further configured to adjust a value of the second frequency. Frequency distribution of the first detection signal and frequency distribution of the second detection signal are adjusted by adjusting the value of the second frequency, and the first detection signal and the second detection signal are adjusted to be near a sampling center frequency of the analog-to-digital converter, so that the first detection signal may be sampled at a positive frequency and the second detection signal may be sampled at a negative frequency simultaneously, thereby reducing a requirement on a sampling bandwidth of the ADC.

In a possible implementation, the second radio frequency transmitting unit is further configured to adjust a value of the third frequency and a delay between a signal transmitted by the second radio frequency transmitting unit and a signal transmitted by the first radio frequency transmitting unit.

According to a third aspect, an optical fiber sensing apparatus is provided, where the optical fiber sensing apparatus includes: a laser, a coupler, a first radio frequency transmitting unit, a quadrature modulator, an optical fiber circulator, a coherent receiver, a radio frequency analog-to-digital conversion unit, and a frequency band calculation unit; an optical signal emitted by the laser is coupled into two optical signals by the coupler, one optical signal is transmitted to the quadrature modulator as probe light, and the other optical signal is transmitted to the coherent receiver as local oscillator light; the first radio frequency transmitting unit is configured to generate a first radio frequency signal and a second radio frequency signal whose frequencies are a second frequency and that are quadrature; the quadrature modulator is configured to modulate the first radio frequency signal and the second radio frequency signal that are quadrature onto the probe light in a first polarization state, to obtain a probe light pulse signal; the optical fiber circulator is configured to connect an optical fiber under test, the optical fiber circulator is configured to input the probe light pulse signal into the optical fiber under test, and the optical fiber circulator is further configured to output signal light generated in the optical fiber under test to the coherent receiver; the coherent receiver is configured to obtain four quadrature electrical signals based on the local oscillator light and the signal light generated in the optical fiber under test, where the four quadrature electrical signals include two quadrature electrical signals in the first polarization state and two quadrature electrical signals in a second polarization state; the radio frequency analog-to-digital conversion unit is configured to convert the four electrical signals to obtain two digital signals in the first polarization state and two digital signals in the second polarization state; and the frequency band calculation unit is configured to compute a spectrum of the signal light based on the two digital signals in the first polarization state and the two digital signals in the second polarization state, where the spectrum includes a first detection signal at a positive frequency and a second detection signal at a negative frequency.

According to the optical fiber sensing apparatus provided in this embodiment of this application, a signal receiving apparatus of the optical fiber sensing apparatus receives the signal light via the coherent receiver, and obtains the two quadrature electrical signals *X_{I}* and *X_{Q}* in the first polarization state of the signal light and the two quadrature electrical signals *Y_{I}* and *Y_{Q}* in the second polarization state of the signal light based on the signal light and the local oscillator light. After the radio frequency analog-to-digital conversion unit converts the four quadrature electrical signals into the digital signals, and after the frequency band calculation unit performs frequency band calculation on the four digital signals *X_{I}*, *X_{Q}*, *Y_{I}*, and *Y_{Q}*, the spectrum including the first detection signal at the positive frequency and the second detection signal at the negative frequency may be obtained. For example, the first detection signal may be a φOTDR signal, and the second detection signal may be a BOTDR signal. On this basis, a frequency of probe light may be adjusted, so that a frequency of the first detection signal at the positive frequency can be near a central sampling frequency (positive frequency) of the analog-to-digital converter, and a frequency of the second detection signal at the negative frequency is distributed near a central sampling frequency (negative frequency) of the analog-to-digital converter. In this way, the first detection signal and the second detection signal may be sampled at the negative frequency and at the positive frequency respectively via ADCs of a same type, so that a set of transceiver apparatuses can receive both the BOTDR signal and the φOTDR signal, to monitor a plurality of parameters such as vibration, temperature, and strain. Compared with a conventional optical fiber sensing apparatus, the solution provided in this embodiment of this application can reduce a requirement on frequency coverage of the coherent receiver and the ADC in the signal receiving apparatus. For example, the conventional optical fiber sensing apparatus samples a first detection signal and a second detection signal at a positive frequency, and has a high requirement on frequency coverage. In the solution provided in this application, the first detection signal is sampled at the positive frequency, and the second detection signal is sampled at the negative frequency, so that the requirement on the frequency coverage of the coherent receiver and the ADC in the signal receiving apparatus can be reduced by half.

In a possible implementation, the coherent receiver includes four output ends, the radio frequency analog-to-digital conversion unit includes four radio frequency analog-to-digital converters, the four radio frequency analog-to-digital converters are connected to the four output ends of the coherent receiver in one-to-one correspondence, and the radio frequency analog-to-digital converter includes a numerically controlled oscillator, a first frequency mixer, a first filter, and a first analog-to-digital converter; an output end of the numerically controlled oscillator is connected to a first input end of the first frequency mixer, a second input end of the first frequency mixer is connected to an output end of the coherent receiver, an output end of the first frequency mixer is connected to an input end of the first filter, an output end of the first filter is connected to an input end of the first analog-to-digital converter, and an output end of the first analog-to-digital converter is connected to the frequency band calculation unit; and the numerically controlled oscillator is configured to generate a radio frequency signal at a first frequency, the first frequency mixer is configured to perform frequency mixing on an electrical signal and the radio frequency signal whose frequency is the first frequency, the first filter is configured to filter out a high-frequency component in a frequency-mixed signal, to convert the electrical signal into baseband, and the first analog-to-digital converter is configured to convert the baseband-converted electrical signal into a digital signal, where a central sampling frequency of the first analog-to-digital converter is the first frequency.

In a possible implementation, the radio frequency analog-to-digital converter further includes a 90° phase shifter, a second frequency mixer, a second filter, and a second analog-to-digital converter; the output end of the numerically controlled oscillator is further connected to an input end of the 90° phase shifter, an output end of the 90° phase shifter is connected to a first input end of the second frequency mixer, a second input end of the second frequency mixer is connected to the output end of the coherent receiver, an output end of the second frequency mixer is connected to an input end of the second filter, an output end of the second filter is connected to an input end of the second analog-to-digital converter, and an output end of the second analog-to-digital converter is connected to the frequency band calculation unit; and the numerically controlled oscillator is configured to generate the radio frequency signal at the first frequency, the 90° phase shifter is configured to shift a phase of the radio frequency signal by 90°, the second frequency mixer is configured to perform frequency mixing on the electrical signal output by the coherent receiver and the phase-shifted radio frequency signal, the second filter is configured to filter out a high-frequency component in a frequency-mixed signal, to convert the electrical signal into baseband, and the second analog-to-digital converter is configured to convert the baseband-converted electrical signal into a digital signal, where a central sampling frequency of the second analog-to-digital converter is the first frequency.

In a possible implementation, for example, the first detection signal is a phase-sensitive optical time-domain reflectometer φOTDR signal, and the second detection signal is a Brillouin optical time-domain reflectometer BOTDR signal.

In a possible implementation, the first detection signal and the second detection signal are detection signals generated through scattering of a pulse in the first polarization state of the probe light.

In a possible implementation, the signal transmitting apparatus further includes a second transmitting unit; the second radio frequency transmitting unit is configured to generate a third radio frequency signal and a fourth radio frequency signal whose frequencies are a third frequency and that are quadrature; and the quadrature modulator is further configured to modulate the third radio frequency signal and the fourth radio frequency signal that are quadrature onto the probe light in the second polarization state; and the frequency band calculation unit is configured to compute the spectrum of the signal light based on the two digital signals in the first polarization state and the two digital signals in the second polarization state, where the spectrum includes the first detection signal at the positive frequency and the second detection signal at the negative frequency, the first detection signal is a detection signal generated through scattering of a pulse in the first polarization state of the probe light, and the second detection signal is a detection signal generated through scattering of a pulse in the second polarization state of the probe light.

According to the optical fiber sensing apparatus provided in this embodiment of this application, the signal transmitting apparatus separately modulates radio frequency signals at different frequencies onto probe light in two polarization states, and the two polarization states do not affect each other. The signal receiving apparatus may collect a first detection signal generated from a pulse in the first polarization state and a second detection signal generated from a pulse in the second polarization state. In this way, a frequency distribution range of the first detection signal and a frequency distribution range of the second detection signal may be flexibly adjusted by respectively adjusting the second frequency and the third frequency, and the first detection signal and the second detection signal can be flexibly adjusted to adapt to different operating frequency bands of the signal receiving apparatus.

In a possible implementation, when a frequency range of the first detection signal does not match a first frequency range, or when a frequency range of the second detection signal does not match a second frequency range, the first radio frequency transmitting unit is configured to adjust the second frequency, and/or the radio frequency analog-to-digital converter is configured to adjust the first frequency.

In a possible implementation, the first radio frequency transmitting unit is further configured to adjust the second frequency when an absolute value of a frequency range of the first detection signal overlaps an absolute value of a frequency range of the second detection signal.

In a possible implementation, the first detection signal is the phase-sensitive optical time-domain reflectometer φOTDR signal, the second detection signal is the Brillouin optical time-domain reflectometer BOTDR signal, the optical fiber sensing apparatus further includes a signal quality calculation unit, and the signal quality calculation unit is configured to determine fitting precision of the BOTDR signal and phase noise of the φOTDR signal.

In a possible implementation, the second radio frequency transmitting unit is further configured to adjust, based on the fitting precision of the BOTDR signal and/or the phase noise of the φOTDR signal, a value of the third frequency and a delay between a signal transmitted by the second radio frequency transmitting unit and a signal transmitted by the first radio frequency transmitting unit.

According to a fourth aspect, a signal processing method is provided, where the method is applied to the optical fiber sensing apparatus provided in any implementation of the third aspect. The method includes: The laser emits the optical signal; the coupler couples the optical signal emitted by the laser into the two optical signals, where the optical signal is transmitted to the quadrature modulator as the probe light, and the other optical signal is transmitted to the coherent receiver as the local oscillator light; the first radio frequency transmitting unit generates the first radio frequency signal and the second radio frequency signal whose frequencies are the second frequency and that are quadrature; the quadrature modulator modulates the first radio frequency signal and the second radio frequency signal that are quadrature onto the probe light in the first polarization state, to obtain the probe light pulse signal; the optical fiber circulator inputs the probe light pulse signal into the optical fiber under test, and outputs the signal light generated in the optical fiber under test to the coherent receiver; the coherent receiver obtains the four in-phase and quadrature electrical signals based on the local oscillator light and the signal light, where the four quadrature electrical signals include the two in-phase and quadrature electrical signals in the first polarization state and the two in-phase and quadrature electrical signals in the second polarization state; the radio frequency analog-to-digital conversion unit converts the four electrical signals to obtain the two digital signals in the first polarization state and the two digital signals in the second polarization state; and the frequency band calculation unit computes the spectrum of the signal light based on the two digital signals in the first polarization state and the two digital signals in the second polarization state, where the spectrum includes the first detection signal at the positive frequency and the second detection signal at the negative frequency.

In a possible implementation, the method further includes: When the frequency range of the first detection signal does not match the first frequency range, or when the frequency range of the second detection signal does not match the second frequency range, the first radio frequency transmitting unit adjusts the second frequency, and/or the radio frequency analog-to-digital converter adjusts the first frequency.

In a possible implementation, the method further includes: The first radio frequency transmitting unit adjusts the second frequency when the absolute value of the frequency range of the first detection signal overlaps the absolute value of the frequency range of the second detection signal.

In a possible implementation, the method further includes: The second radio frequency transmitting unit adjusts, based on the fitting precision of the BOTDR signal and/or the phase noise of the φOTDR signal, the value of the third frequency and the delay between the signal transmitted by the second radio frequency transmitting unit and the signal transmitted by the first radio frequency transmitting unit.

### BRIEF DESCRIPTION OF DRAWINGS

FIG. 1 is a diagram of several types of scattering of light according to an embodiment of this application;
FIG. 2 is a diagram of Rayleigh scattering according to an embodiment of this application;
FIG. 3 is a diagram of a distributed optical fiber sensing technology according to an embodiment of this application;
FIG. 4 is a diagram of an optical fiber sensing apparatus with multi-parameter detection according to an embodiment of this application;
FIG. 5 is a diagram of a frequency difference between Rayleigh scattering light and Brillouin scattering light according to an embodiment of this application;
FIG. 6 is a diagram of an optical fiber sensing apparatus according to an embodiment of this application;
FIG. 7 is a diagram of a first polarization state of probe light according to an embodiment of this application;
FIG. 8 is a diagram of a spectrum of signal light according to an embodiment of this application;
FIG. 9A and FIG. 9B are a comparison diagram of two ADC collection frequency bands according to an embodiment of this application;
FIG. 10 is a diagram of another optical fiber sensing apparatus according to an embodiment of this application;
FIG. 11 is a diagram of double-sideband modulation;
FIG. 12 is a diagram of single-sideband modulation;
FIG. 13 is a diagram of a detection signal and a mirror signal of the detection signal;
FIG. 14 is a diagram of a coherent receiver according to an embodiment of this application;
FIG. 15A and FIG. 15B are a diagram of a radio frequency analog-to-digital converter according to an embodiment of this application;
FIG. 16A and FIG. 16B are comparison diagrams of sampling ranges of two types of analog-to-digital converters according to an embodiment of this application;
FIG. 17 is a diagram of a radio frequency analog-to-digital converter according to an embodiment of this application;
FIG. 18 is a diagram of a signal quality curve of a detection signal according to an embodiment of this application;
FIG. 19 is a diagram of sampling of another analog-to-digital converter according to an embodiment of this application;
FIG. 20 is a diagram of another optical fiber sensing apparatus according to an embodiment of this application;
FIG. 21 is a diagram of a first polarization state and a second polarization state of probe light according to an embodiment of this application;
FIG. 22 is a diagram of a spectrum of signal light according to an embodiment of this application;
FIG. 23 is a diagram of a signal quality curve of another detection signal according to an embodiment of this application;
FIG. 24 is a diagram of another optical fiber sensing apparatus according to an embodiment of this application; and
FIG. 25 is a flowchart of a signal processing method according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. The term "coupling" is used for representing an electrical connection, including a direct connection through a wire or a connection end or an indirect connection through another device. Therefore, "coupling" should be considered as a generalized electronic communication connection.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

When light is propagated over an optical fiber, a part of incident light derives from an original propagation direction and is propagated in any direction due to non-uniformity or nonlinearity of a refractive index of the optical fiber. This phenomenon is referred to as light scattering. In the scattered light scattered in any direction, a small part of the scattered light is propagated in a direction opposite to an incident direction, and is referred to as backscattered light.

There are three main types of backscattered light in the optical fiber: Rayleigh scattering light, Brillouin scattering light, and Raman scattering light. Scattering mechanisms of the three main types of backscattered light are different. Raman scattering and Brillouin scattering involve a change of an optical frequency, and therefore are referred to as inelastic scattering. Correspondingly, Rayleigh scattering that involves no change of an optical frequency is referred to as elastic scattering.

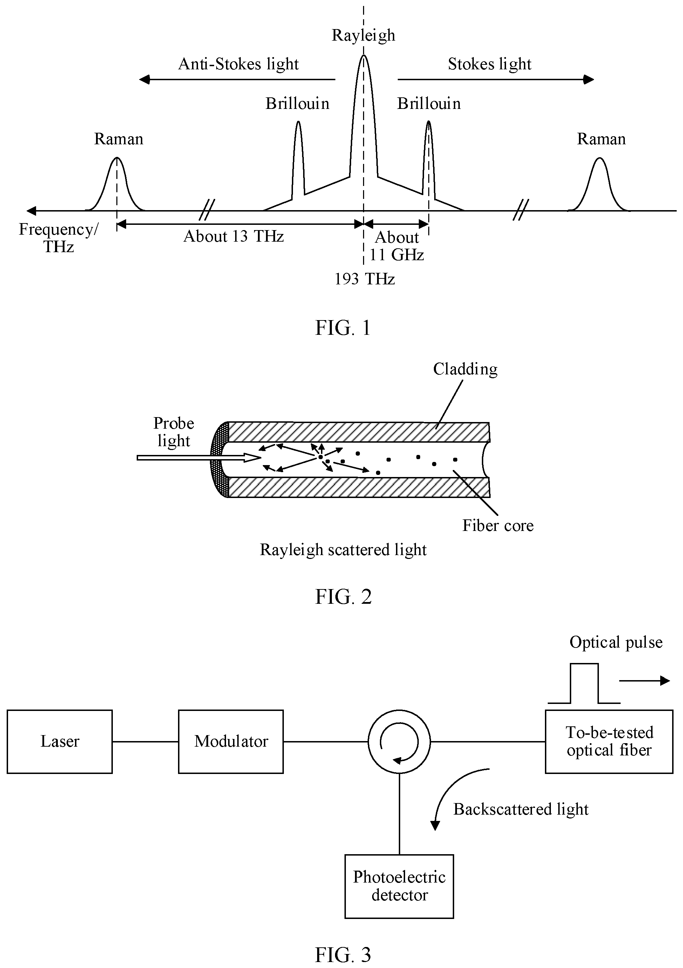

In Raman scattering and Brillouin scattering, an upward or downward frequency shift occurs in light due to interaction between the light and optical phonons and interaction between the light and acoustic phonons. As shown in FIG. 1, in the optical fiber, under an action of optical phonons, an optical frequency undergoes a frequency shift of about 13 THz, to obtain Raman scattering light, and under an action of acoustic phonons, the optical frequency undergoes a frequency shift of about 11 GHz, to obtain Brillouin scattering light. Light moving in a frequency decreasing direction is referred to as Stokes light, and light moving in a frequency increasing direction is referred to as anti-Stokes light. Various distributed optical fiber sensing systems, such as a Raman optical time-domain reflectometer (Raman optical time-domain reflectometry, ROTDR) and Brillouin optical time-domain analyzer (Brillouin optical time-domain analysis, BOTDA), all implement sensing based on the two inelastic scattering mechanisms.

Rayleigh scattering is mainly caused by non-uniformity of a medium in the optical fiber. As shown in FIG. 2, during manufacturing of the optical fiber, due to factors such as a manufacturing process, some random refractive index fluctuations are inevitably introduced into the optical fiber. These refractive index fluctuations are represented by black dots in FIG. 2. When probe light is propagated over the optical fiber, scattered light, randomly propagated in all directions, is generated at the refractive index fluctuations. A small part of the scattered light is propagated backward and meets a propagation condition of a single-mode optical fiber, to return from a scattering occurrence position to an incident end of the probe light. The backward Rayleigh scattering light becomes a basis of distributed optical fiber sensing that is based on Rayleigh scattering.

A distributed optical fiber sensing technology is a new sensing technology that uses light as a carrier and uses changes of a phase, intensity, and the like of light to sense external measured parameters (such as temperature, strain, and pressure). The optical fiber sensing technology uses an optical fiber as a sensing and transmission component. Therefore, the optical fiber has a simpler structure and is more convenient than a traditional electromechanical sensor. The optical fiber is cheap, has a large operating bandwidth range, has a small loss, and can implement long-distance and large-range sensing. Because of pressure resistance and tension resistance, the optical fiber can be used in both a narrow and long area in a small range and a dangerous area, for example, a flammable and explosive area. Light, used as a sensing signal, is not easily interfered by electromagnetic interference and can be used in areas with strong electromagnetic fields. The distributed optical fiber sensing technology has obvious advantages and is widely used in fields such as electric power, petrochemical, transportation, civil engineering, and aerospace.

A basic principle of the distributed optical fiber sensing technology is shown in FIG. 3. A laser generates a light source. After the light source is modulated into an optical pulse by a modulator, the optical pulse is injected into an optical fiber under test via an optical fiber circulator. Backscattered light generated from the optical pulse in the optical fiber is transmitted backward, and is received by a photoelectric detector to obtain intensity information. The backscattered light includes Rayleigh scattering light, Brillouin scattering light, and the like. Due to existence of an optical fiber loss, intensity of the backscattered light attenuates exponentially along the optical fiber. The optical fiber loss can be measured based on an exponential attenuation speed. A sudden increase of a local signal indicates that there is a high reflection point. A sudden local increase in attenuation indicates that there is a loss point or a breakpoint. An optical time-domain reflectometer (optical time-domain reflectometry, OTDR) manufactured according to this principle is widely used in the communication field and other fields to detect a status of an optical fiber link.

Common optical time-domain reflectometers include a phase-sensitive optical time-domain reflectometer (Phase-sensitive OTDR, ΦOTDR) and a Brillouin optical time-domain reflectometer (Brillouin Optical Time-Domain Reflectometry, BOTDR). The ΦOTDR is an interference scattering optical fiber sensing technology that uses an interference effect between backward Rayleigh scattering light, and has many advantages, such as high sensitivity, a long measurement distance, a simple structure, and easy implementation. Compared with Brillouin scattering light and Raman scattering light, because the Rayleigh scattering light has higher power, average signal processing time can be reduced, and the Rayleigh scattering light has a vibration measurement capability. Therefore, vibration of the optical fiber can be detected only by detecting a change of the Rayleigh scattering light in the optical fiber.

The BOTDR uses Brillouin scattering of the optical fiber. In a common single-mode quartz optical fiber, a fiber core material has a thermo-optic effect and a photoelastic effect, the two effects affect a sound speed in the optical fiber material, and a change of the sound speed leads to a change of the Brillouin scattering light accordingly. Therefore, the change of the Brillouin scattering light is related to temperature and strain of the optical fiber. In this way, temperature or stress distribution at each point on the optical fiber can be detected by detecting the change of the Brillouin scattering light in the optical fiber.

A combination of the φOTDR and the BOTDR is an implementation form of multi-parameter sensing. A Rayleigh scattering signal and a Brillouin scattering signal are simultaneously detected, so that the combination implements simultaneous sensing of vibration, temperature, and stress. Features of Brillouin scattering and Rayleigh scattering lie in that: A frequency spacing between Brillouin scattering and Rayleigh scattering is large, and is about 11 GHz. Brillouin scattering has a wide distribution range (where hundreds of MHz to GHz), and a scattering coefficient is weak (a Rayleigh scattering coefficient and a Brillouin scattering coefficient are respectively -81 dB/ns and -93 dB/ns). When Brillouin scattering and Rayleigh scattering are simultaneously detected, detection performance of the combination has high requirements on a bandwidth of a receiver, spurious/harmonic interference of the system, and the like. If sampling and spectrum analysis are simultaneously performed on the Rayleigh scattering signal and the Brillouin scattering signal, requirements on performance and operating frequency ranges of a sampling device and a spectrum analysis device are very high, resulting in problems such as difficult sampling, low sampling precision, and high device costs.

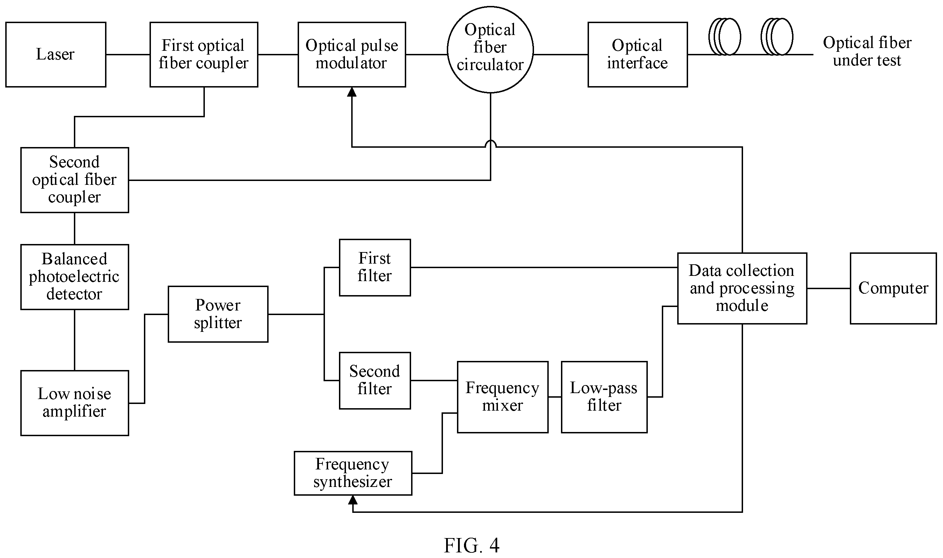

FIG. 4 shows an optical fiber sensing apparatus with multi-parameter detection. Laser light emitted by a laser is split into two paths of laser light by a first optical fiber coupler, one path of laser light is modulated into an optical pulse by an optical pulse modulator, and the other path of laser light enters a second optical fiber coupler. The optical pulse enters a first port of an optical fiber circulator, a second port of the optical fiber circulator outputs the optical pulse, and the optical pulse is injected into an optical fiber under test through an optical interface. Backscattered light of the optical pulse in the optical fiber under test enters the second port of the optical fiber circulator through the optical interface, and then enters the second optical fiber coupler through a third port of the optical fiber circulator. The second optical fiber coupler causes the entered laser and the entered backscattered light to coherently generate envelope information, and outputs the envelope information to a balanced photoelectric detector. The balanced photoelectric detector converts the envelope information into a radio frequency signal, and the radio frequency signal is amplified by a low noise amplifier, and then enters a power splitter. Because a first filter corresponds to a Rayleigh scattering signal frequency band, that is, a carrier frequency band of 200 MHz, and a second filter corresponds to a Brillouin scattering signal frequency band, that is, a carrier frequency band of about 10.8 GHz, the power splitter splits, into two radio frequency signals, the radio frequency signal input into the power splitter. One radio frequency signal is filtered by the first filter to obtain a Rayleigh scattering signal, and the Rayleigh scattering signal enters a first channel of a data collection and processing module. The other radio frequency signal is filtered by the second filter to obtain a Brillouin scattering signal, and the Brillouin scattering signal enters a signal input end of a frequency mixer. A local oscillation signal output by a frequency synthesizer enters a local oscillation input end of the frequency mixer. The frequency mixer performs frequency mixing on the Brillouin scattering signal and the local oscillation signal to obtain a baseband signal. The baseband signal is filtered by a low-pass filter, and then enters a second channel of the data collection and processing module.

The data collection and processing module extracts time domain power information of the Rayleigh scattering signal collected through the first channel, to obtain attenuation information of the optical fiber under test. When the data collection and processing module extracts a vibration frequency at each position point for data collected through the first channel, for example, first stores 200 pieces of data about positions and scattered power along the optical fiber, and then performs fast Fourier transformation on 200 power values corresponding to the positions along the optical fiber, vibration information of the positions along the optical fiber under test is obtained.

The data collection and processing module extracts time domain, frequency domain, and power information corresponding to a frequency scanning point, that is, a Brillouin signal, of the frequency synthesizer and performs fitting on a Brillouin frequency corresponding to each position of the optical fiber under test to obtain a center frequency of a Brillouin spectrum. Therefore, subtracting is performed between the central frequency of the Brillouin spectrum and a center frequency of a reference Brillouin spectrum, to finally reflect temperature information and strain information of the optical fiber under test.

In the solution shown in FIG. 4, a large-bandwidth balanced receiver is used to receive a signal, and a φOTDR signal is separated from a BOTDR signal by the first filter and the second filter. A radio frequency source (the frequency synthesizer) and the frequency mixer that are separate from each other perform frequency mixing and filtering on the BOTDR signal, an obtained signal is transferred to a baseband, and then the φOTDR signal and the BOTDR signal are collected via a plurality of ADCs, so that the Brillouin scattering signal and the Rayleigh scattering signal can be simultaneously detected, and a plurality of parameters such as vibration, temperature, and strain of the optical fiber under test can be monitored based on signal multiplexing sensing and demodulation.

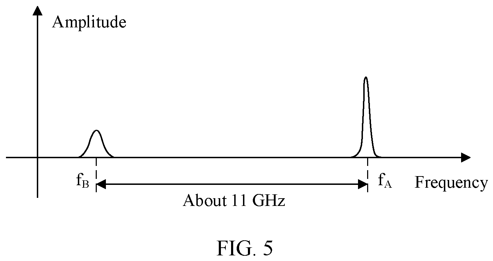

However, the foregoing solution still has some disadvantages. With reference to FIG. 1, a frequency of Rayleigh scattering light is the same as a frequency of probe light, and a frequency of Brillouin scattering light is usually increased by vB or decreased by vB on the basis of the frequency of the probe light, where vB is a Brillouin frequency shift. According to different optical fiber materials or types, the Brillouin frequency shift is about 8 GHz to 12 GHz, for example, vB≈11 GHz. In a single test scenario, the Brillouin frequency shift is a fixed value. On this basis, with reference to FIG. 5, there is a frequency difference of about 11 GHz between the frequency (f_{A}) of the Rayleigh scattering light and the frequency (f_{B}) of the Brillouin scattering light in a spectrum. Therefore, for the solution shown in FIG. 4, the frequency synthesizer, the receiver, the frequency mixer, the filter, and the like need to cover a frequency range greater than 11 GHz, to completely sample the φOTDR signal and the BOTDR signal. This has a high requirement on device performance. In addition, in the foregoing solution, receiving frequencies of the φOTDR signal and the BOTDR signal cannot be flexibly controlled. In an actual engineering application, detection performance has high requirements on indicators such as a spurious-free dynamic range and total harmonic distortion of a transceiver system.

To alleviate the foregoing problems, embodiments of this application provide an optical fiber sensing apparatus with multi-parameter detection, to reduce a requirement on frequency coverage of a device while monitoring a plurality of parameters such as vibration, temperature, and strain.

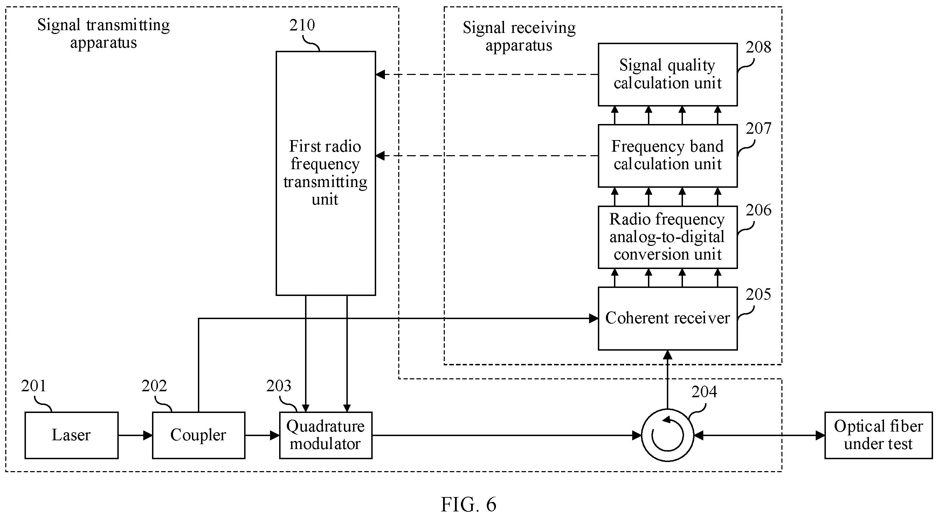

For example, FIG. 6 is a diagram of a structure of an optical fiber sensing apparatus according to an embodiment of this application. The optical fiber sensing apparatus provided in this embodiment of this application includes a signal transmitting apparatus and a signal receiving apparatus. The signal transmitting apparatus includes a laser 201, a coupler 202, a quadrature modulator 203, an optical fiber circulator 204, and a first radio frequency transmitting unit 210. The signal receiving apparatus includes a coherent receiver 205, a radio frequency analog-to-digital conversion unit 206, a frequency band calculation unit 207, and a signal quality calculation unit 208. The signal transmitting apparatus is configured to transmit a probe light pulse, the probe light pulse scatters in an optical fiber under test to obtain signal light, and the signal receiving apparatus is configured to receive and process the signal light.

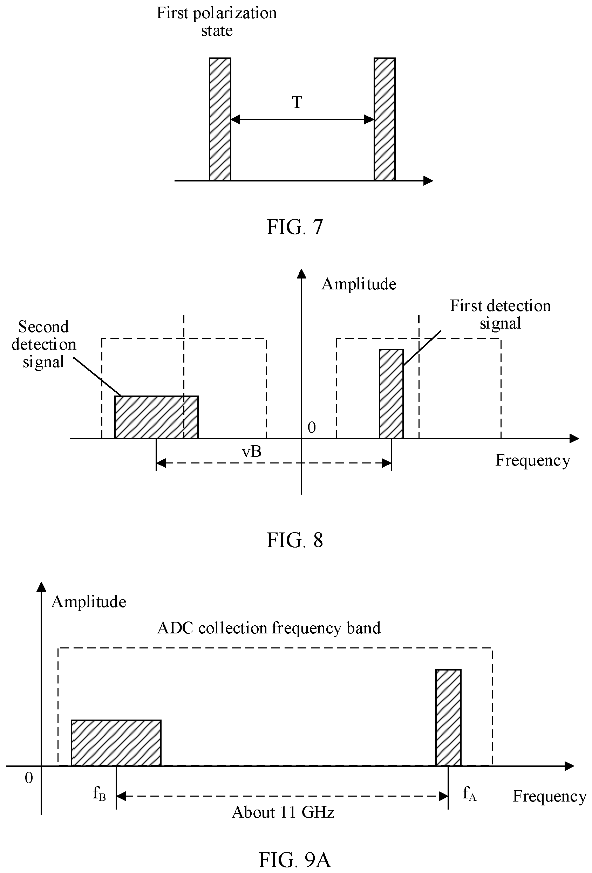

For example, the laser 201 is configured to generate an optical signal, and the first radio frequency transmitting unit 210 is configured to generate a first radio frequency signal and a second radio frequency signal whose frequencies are a second frequency (f2) and that are quadrature, in other words, the first radio frequency signal and the second radio frequency signal have the same frequency and a phase difference of 90°. The optical signal generated by the laser 201 is coupled into two optical signals by the coupler 202, one optical signal is transmitted to the quadrature modulator 203 as probe light, and the other optical signal is transmitted to the coherent receiver 205 as local oscillator light. The quadrature modulator 203 is configured to modulate the first radio frequency signal and the second radio frequency signal onto the probe light, as shown in FIG. 7, to obtain a probe light pulse signal with a periodicity of T. The optical fiber circulator 204 is configured to input the probe light pulse signal into an optical fiber under test, and the probe light scatters in the optical fiber under test to obtain signal light. The optical fiber circulator 204 is further configured to output the signal light generated in the optical fiber under test to the coherent receiver 205. The coherent receiver 205 is configured to: obtain, based on the local oscillator light and the signal light, two analog quadrature electrical signals (denoted as *X_{I}* and *X_{Q}*) in a first polarization state of the signal light and two analog quadrature electrical signals (denoted as *Y_{I}* and *Y_{Q}*) in a second polarization state of the signal light, and output the four signals (*X_{I}*, *X_{Q}*, *Y_{I}*, and *Y_{Q}*) to the radio frequency analog-to-digital conversion unit 206. The radio frequency analog-to-digital conversion unit 206 is configured to: convert the analog signals output by the coherent receiver 205 into digital signals, and send the converted digital signals to the frequency band calculation unit 207. The frequency band calculation unit 207 is configured to perform frequency band calculation on the digital signals output by the radio frequency analog-to-digital converter 206 to obtain a spectrum. As shown in FIG. 8, the spectrum includes a first detection signal at a positive frequency and a second detection signal at a negative frequency, a frequency difference between the first detection signal and the second detection signal is vB, and vB herein refers to a Brillouin frequency shift.

The optical fiber sensing apparatus provided in this embodiment of this application includes the signal transmitting apparatus and the signal receiving apparatus. The signal transmitting apparatus modulates the two quadrature radio frequency signals onto the optical signal via the quadrature modulator 203 to form the probe light pulse, and inputs the probe light pulse signal into the optical fiber under test via the optical fiber circulator 204. The probe light pulse undergoes Rayleigh scattering and Brillouin scattering in the optical fiber under test, and generated backscattered light, used as signal light, is output to the signal receiving apparatus via the optical fiber circulator 204.

The signal receiving apparatus parses the received signal light via the coherent receiver 205. The coherent receiver 205 obtains, based on the local oscillator light and the signal light, the two analog electrical signals (*X_{I}* and *X_{Q}*) in the first polarization state of the signal light and the two analog electrical signals (*Y_{I}* and *Y_{Q}*) in the second polarization state of the signal light. The radio frequency analog-to-digital conversion unit 206 performs analog-to-digital conversion on the four analog electrical signals, to obtain two digital electrical signals (*X_{I}* and *X_{Q}*) corresponding to the first polarization state of the signal light and two digital signals (*Y_{I}* and *Y_{Q}*) corresponding to the second polarization state of the signal light, where each polarization state herein includes an in-phase (in-phase, I) signal and a quadrature (quadrature, Q) signal. In this way, a spectrum obtained by performing Fourier transform and squaring after magnitude taking on the I signal (that is, *X_{I}*) and the Q signal (that is, *X_{Q}*) in the first polarization state on a complex plane includes the first detection signal at the positive frequency and the second detection signal at the negative frequency. For example, the first detection signal is a φOTDR signal, and the second detection signal is a BOTDR signal; or the first detection signal is a BOTDR signal, and the second detection signal is a φOTDR signal. For a spectrum obtained by performing Fourier transform and squaring after magnitude taking on the I signal (that is, *Y_{I}*) and the Q signal (that is, *Y_{Q}*) in the second polarization state on a complex plane, because polarization states of the signal light and the probe light in the optical fiber rotate, when frequency band calculation is performed on the signal in the first polarization state of the signal light and the signal in the second polarization state of the signal light, a spectrum obtained by performing frequency band calculation on *Y_{I}* and *Y_{Q}* is the same as a spectrum obtained by performing frequency band calculation on *X_{I}* and *X_{Q}*. The same spectrum herein means that frequency distribution is the same, and amplitudes of frequency components may be different.

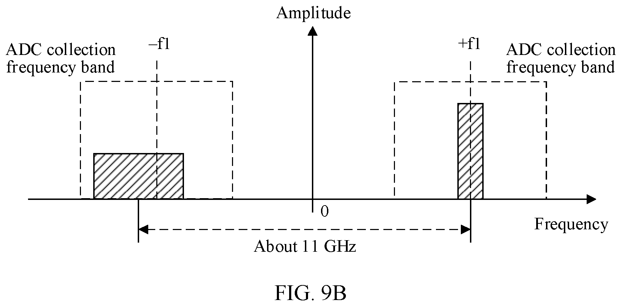

On this basis, the signal transmitting apparatus adjusts the second frequency (f2), where frequencies of the first radio frequency signal and the second radio frequency signal transmitted by the first radio frequency transmitting unit are both the second frequency, so that the frequencies of the first detection signal and the second detection signal are distributed near a central sampling frequency (denoted as a first frequency (f1) in this embodiment of this application) of the analog-to-digital converter (analog-to-digital converter, ADC). In this way, the first detection signal and the second detection signal may be sampled at the negative frequency and at the positive frequency respectively via ADCs of a same type, so that a set of transceiver apparatuses can simultaneously receive the BOTDR signal and the φOTDR signal, to monitor a plurality of parameters such as vibration, temperature, and strain. In addition, the first detection signal is sampled at the positive frequency and the second detection signal is sampled at the negative frequency respectively via ADCs of a same type, so that a requirement on frequency coverage of the ADC can be reduced. Refer to FIG. 9A. In the solution shown in FIG. 4, the balanced photodetector, the low noise amplifier, and the like need to cover a frequency range of 11 GHz. Refer to FIG. 9B. In the optical fiber sensing apparatus provided in this application, the signal receiving apparatus may simultaneously perform sampling at the positive frequency and the negative frequency, so that a requirement on frequency coverage of the signal receiving apparatus is reduced by half, and the frequency coverage may be reduced to 5.5 GHz. In addition, sampling the first detection signal at the positive frequency and sampling the second detection signal at the negative frequency can reduce spectral crosstalk and harmonic crosstalk between the BOTDR signal and the φOTDR signal, and improve system detection precision.

With reference to FIG. 1, it can be learned that, the frequency of the Rayleigh scattering light generated through Rayleigh scattering of the probe light in the optical fiber is the same as the frequency of the probe light. However, when Brillouin scattering occurs, scattering to a high frequency or scattering to a low-frequency may occur. If the Brillouin frequency shift vB is about 11 GHz, that is, if f is the frequency of the probe light, the frequency of the generated Brillouin scattering light may be f±11 GHz. Therefore, the first detection signal at the positive frequency may be a BOTDR signal, and the second detection signal at the negative frequency may be a φOTDR signal; or the first detection signal at the positive frequency may be a φOTDR signal, and the second detection signal at the negative frequency may be a BOTDR signal. However, because intensity of a Brillouin scattering light signal obtained through scattering to the low frequency is greater than intensity of a Brillouin scattering light signal obtained through scattering to the high frequency, in this embodiment of this application, an example in which the Brillouin scattering light is obtained through scattering to the low frequency is used for description, that is, a frequency of the Brillouin scattering light signal is f-vB.

However, in the optical fiber sensing apparatus provided in this embodiment of this application, the signal receiving apparatus may sample the first detection signal at the positive frequency, and sample the second detection signal at the negative frequency, for example, sample the φOTDR signal at the positive frequency, and sample the BOTDR signal at the negative frequency. Because a frequency difference between the φOTDR signal and the BOTDR signal is the Brillouin frequency shift, for example, 11 GHz, if the first detection signal and the second detection signal need to be sampled at the negative frequency and at the positive frequency respectively via ADCs of a same type, the central sampling frequency of the ADC needs to be near 5.5 GHz. For example, if a frequency of the φOTDR signal is about 6 GHz, and a frequency of the BOTDR signal is about -4 GHz, an ADC whose central sampling frequency is about 5 GHz (-5 GHz) may be selected. Because the frequency (6 GHz) of the φOTDR signal is near 5 GHz, and the frequency (-4 GHz) of the BOTDR signal is near -5 GHz, the ADC may sample the φOTDR signal at the positive frequency, and may also sample the BOTDR signal at the negative frequency.

Sampling the φOTDR signal at the positive frequency and sampling the BOTDR signal at the negative frequency can reduce crosstalk between the φOTDR signal and the BOTDR signal. However, because the coherent receiver or the like is not ideal, a signal at the negative frequency may also leak a small part to the positive frequency to form a mirror, and a signal at the positive frequency may also leak a small part to the negative frequency to form a mirror. Therefore, to avoid crosstalk on the φOTDR signal from the mirror signal of the BOTDR signal, or avoid crosstalk on the BOTDR signal from the φOTDR signal, absolute values of the frequencies of the φOTDR signal and the BOTDR signal are close but different, or absolute values of frequency ranges of the two signals do not overlap. For example, a frequency of the mirror signal of the φOTDR signal is different from the frequency of the BOTDR signal, or a frequency of the mirror signal of the BOTDR signal is different from the frequency of the φOTDR signal.

For example, the frequency of the φOTDR signal is about 6 GHz, the frequency of the BOTDR signal is about -4 GHz, the frequency of the mirror signal of the BOTDR signal is about +4 GHz, and the frequency of the mirror signal of the φOTDR signal is about 6 GHz. In this way, the frequency of the φOTDR signal is staggered with the frequency of the mirror signal of the BOTDR signal, and the frequency of the BOTDR signal is staggered with the frequency of the mirror signal of the φOTDR signal, so that crosstalk between the signals can be reduced.

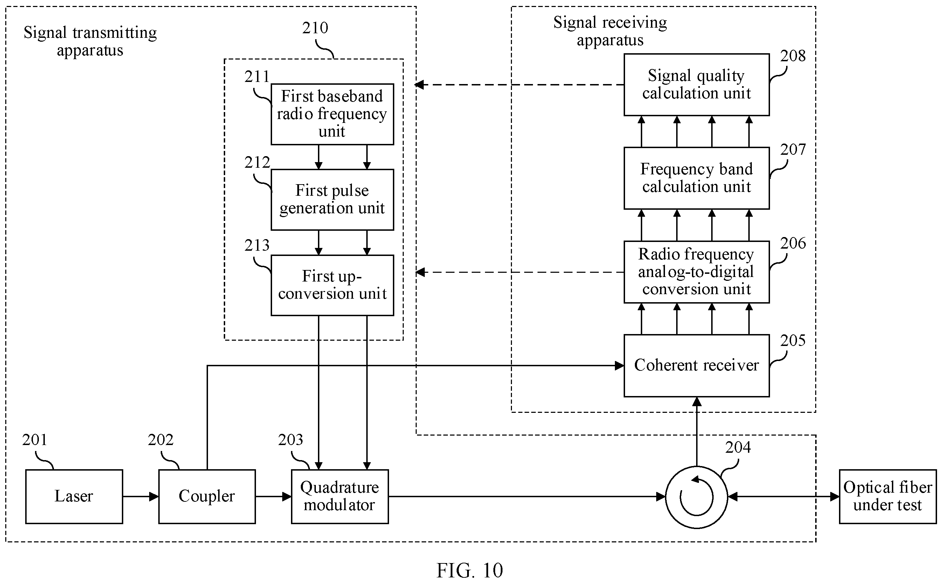

For example, in a possible implementation, as shown in FIG. 10, the first radio frequency transmitting unit 210 includes a first baseband radio frequency unit 211, a first pulse generation unit 212, and a first up-conversion unit 213. The first baseband radio frequency unit 211 is configured to generate two quadrature baseband frequency modulation signals, for example, a first baseband frequency modulation signal and a second baseband frequency modulation signal that are quadrature. The first baseband frequency modulation signal may be represented as *xᵢ*, and the second baseband frequency modulation signal may be represented as *x_{q}*. For example, *xᵢ* = cos (2*π*Δ*f*₁*t*), and *x_{q}* = sin (2*π*Δ*f*₁*t*).

The first baseband radio frequency unit 211 transmits the generated first baseband frequency modulation signal and second baseband frequency modulation signal to the first pulse generation unit 212, the first pulse generation unit 212 generates, based on the first baseband frequency modulation signal, a first baseband pulse frequency modulation signal with a pulse width of τ , and the first pulse generation unit 212 generates, based on the second baseband frequency modulation signal, a second baseband pulse frequency modulation signal with a pulse width of τ. The first baseband pulse frequency modulation signal may be represented as *xₚᵢ*, and the second baseband pulse frequency modulation signal may be represented as *x_{pq}*. For example, ${x}_{pi} = {x}_{i} rect \left(\frac{t}{τ}\right)$ and ${x}_{pq} = {x}_{q} rect \left(\frac{t}{τ}\right)$.

The first up-conversion unit 213 is configured to generate, based on the first baseband pulse frequency modulation signal and the second baseband pulse frequency modulation signal, a first radio frequency signal and a second radio frequency signal that are quadrature, where the first radio frequency signal may be represented as *sₓᵢ*, and the second radio frequency signal may be represented as *s_{xq}* , for example, *sₓᵢ* = *xₚᵢ* cos(2*πf*_{*IF*1}*t*) - *x_{pq}* sin (2*πf*_{*IF*1}*t*) and *s_{xq}* = *xₚᵢ* sin(2*πf*_{*IF*1}*t*) + *x_{pq}* cos (2*πf*_{*IF*1}*t*) . Frequencies of the first radio frequency signal and the second radio frequency signal are f1, and f1 = *f*_{*IF*1} + Δ*f*₁ . The frequencies of the first radio frequency signal and the second radio frequency signal may be adjusted by adjusting Δ*f*₁ and *f*_{*IF*1} . In a possible implementation, if a frequency of a baseband signal generated by the first baseband radio frequency unit 211 is non-adjustable, Δ*f*₁ in the foregoing example may be zero.

The quadrature modulator 203 may modulate, onto probe light generated by the laser 201, the first radio frequency signal and the second radio frequency signal quadrature and that are generated by the first radio frequency transmitting unit 210, to form single-sideband modulation, thereby avoiding occurrence of a double-sideband signal.

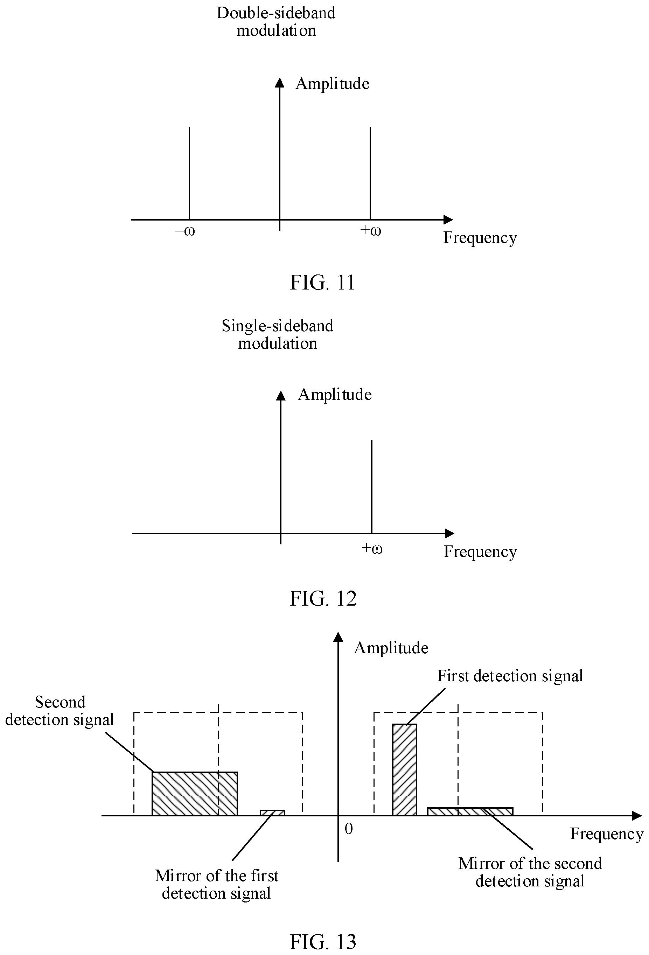

A conventional modulator can modulate only intensity or a phase of a signal. If only the intensity or the phase of the signal is modulated, a double-sideband signal is usually generated. Refer to FIG. 11. A signal with a frequency of -ω is also generated while a signal with a frequency of +ω is generated. If double-sideband modulation is used, strong interference is generated between a BOTDR signal and a φOTDR signal. For example, in this embodiment of this application, a frequency of the BOTDR signal is located at a negative frequency, and a frequency of the φOTDR signal is located at a positive frequency. If only the intensity or the phase of the signal is modulated and double-sideband modulation is used, for the φOTDR signal at the positive frequency, a φOTDR signal at the negative frequency is also generated. Intensity of the φOTDR signal at the negative frequency is similar to that of the φOTDR signal at the positive frequency, and the φOTDR signal at the negative frequency causes strong interference to the BOTDR signal at the negative frequency.

In the optical fiber sensing apparatus provided in this embodiment of this application, the signal transmitting apparatus uses the quadrature modulator to modulate both the intensity and the phase, and may modulate the signal onto the single sideband. Refer to FIG. 12. Only a signal at the positive frequency is obtained through modulation, and no interference is generated because there is no signal at the negative frequency. However, in the foregoing example, because the coherent receiver or the like is not ideal, the signal at the negative frequency may also leak the small part to the positive frequency to form the mirror, and the signal at the positive frequency may also leak the small part to the negative frequency to form the mirror. Refer to FIG. 13. Intensity of the mirror signal is far less than that of a signal generated through double-sideband modulation at the negative frequency. In this way, the quadrature modulator 203 may convert crosstalk on the BOTDR signal from the φOTDR signal into crosstalk on the BOTDR signal from a mirror component of the φOTDR signal, and may convert crosstalk on the φOTDR signal from the BOTDR signal into crosstalk on the φOTDR signal from a mirror component of the BOTDR signal, thereby greatly reducing the crosstalk and improving system performance.

The quadrature modulator 203 modulates the first radio frequency signal and the second radio frequency signal that are quadrature onto probe light (for example, in this case, the probe light is single-polarized light) to form a probe light pulse signal. The probe light pulse signal is injected into an optical fiber under test via the optical fiber circulator 204, and backscattered light (signal light) generated from the probe light pulse in the optical fiber under test may be output to the coherent receiver 205 via the optical fiber circulator 204.

In a possible implementation, the optical fiber circulator 204 includes a first end, a second end, and a third end, where the first end of the optical fiber circulator 204 is connected to an output end of the quadrature modulator 203, the second end of the optical fiber circulator 204 is connected to the optical fiber under test, and the third end of the optical fiber circulator 204 is connected to an input end of the coherent receiver 205.

The coherent receiver 205 is an optical-electrical hybrid component, and is configured to: receive signal light and local oscillator light, and perform photoelectric conversion after polarization diversity and optical quadrature frequency mixing, to output electrical signals in two quadrature polarization states. In each polarization state, two in-phase and quadrature electrical signals are also obtained for outputting. For example, in this embodiment of this application, the coherent receiver 205 is configured to receive signal light with Brillouin scattering light and Rayleigh scattering light, receive local oscillator light, and obtain, based on the signal light and the local oscillator light, two quadrature electrical signals in a first polarization state of the signal light and two quadrature electrical signals in a second polarization state of the signal light. Because a frequency of the signal light is high, the received signal light and local oscillator light need to be heterodyned, and then converted.

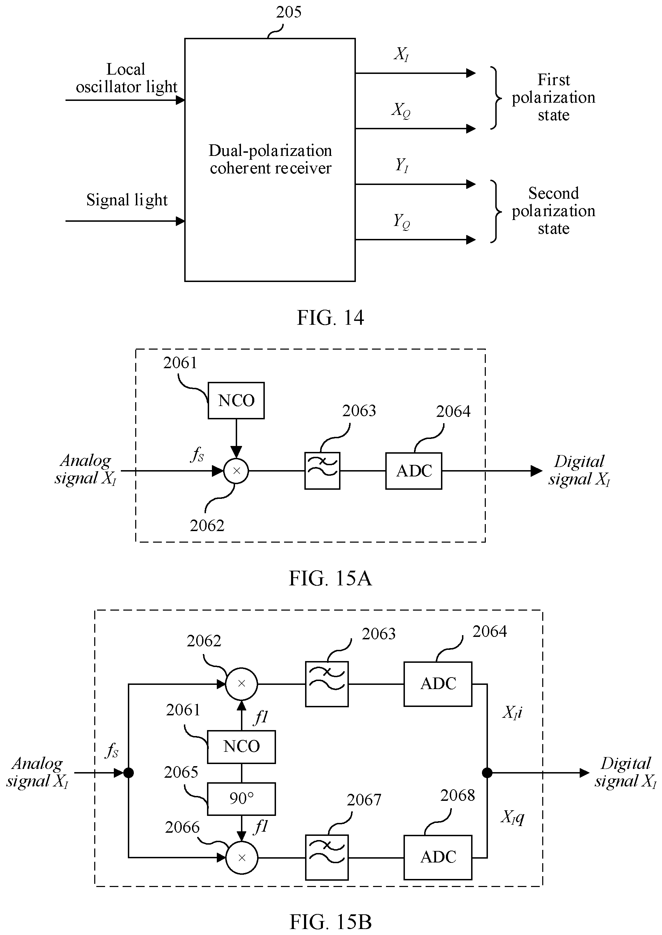

Refer to FIG. 14. In a possible implementation, the two quadrature electrical signals, in the first polarization state, output by the coherent receiver 205 are respectively denoted as *X_{I}* and *X_{Q}*, and the two quadrature electrical signals in the second polarization state are respectively denoted as *Y_{I}* and *Y_{Q}*. The coherent receiver 205 may receive signal light in any polarization state, and decompose the signal light into the first polarization state and the second polarization state that are quadrature for receiving, and output four signals: *X_{I}*, *X_{Q}*, *Y_{I}*, and *Y_{Q}*.

The radio frequency analog-to-digital conversion unit 206 is configured to perform analog-to-digital conversion on the four signals: *X_{I}*, *X_{Q}*, *Y_{I}*, and *Y_{Q}* that are output by the coherent receiver 205, to convert the four signals into digital signals. The coherent receiver 205 includes four output ends. Correspondingly, the radio frequency analog-to-digital conversion unit 206 includes four radio frequency analog-to-digital converters. The four radio frequency analog-to-digital converters are connected to the four output ends of the coherent receiver 205 in one-to-one correspondence. In this embodiment of this application, one of the radio frequency analog-to-digital converters is used as an example. For example, a radio frequency analog-to-digital converter configured to convert the electrical signal *X_{I}* is used as an example. For example, in a possible implementation, as shown in FIG. 15A, the radio frequency analog-to-digital converter 206 includes a numerically controlled oscillator (numerically controlled oscillator, NCO) 2061, a frequency mixer 2062, a first filter 2063, and a first analog-to-digital converter (analog-to-digital converter, ADC) 2064. An output end of the NCO 2061 is connected to a first input end of the first frequency mixer 2062, and a second input end of the first frequency mixer 2062 is connected to an output end of the coherent receiver 205 (for example, an output end through which the coherent receiver 205 outputs an analog signal *X_{I}*), an output end of the first frequency mixer 2062 is connected to an input end of the first filter 2063, an output end of the first filter 2063 is connected to an input end of the first ADC 2064, and an output end of the first ADC 2064 is connected to the frequency band calculation unit 207. The NCO 2061 is configured to generate a radio frequency signal whose frequency is a first frequency (f1), where the first frequency mixer 2062 is configured to perform frequency mixing on the analog signal *X_{I}* and the radio frequency signal whose frequency is the first frequency (f1), and a frequency-mixed signal is filtered by the first filter 2063 and then transmitted to the first ADC 2064 for sampling, to convert the analog signal into a digital signal. Herein, the first frequency (f1) is a central sampling frequency of the first ADC 2064.

For example, because the ADC performs sampling near a baseband, the analog signal *X_{I}* needs to be down-converted to baseband, and then the ADC performs sampling and conversion on a signal that is down-converted to baseband. It is assumed that a frequency of the analog signal *X_{I}* is fs, two frequency components fs+f1 and fs-f1 may be obtained by performing frequency mixing on fs and f1. The first filter 2063 may be a low-pass filter. The low-pass filter may filter out a high-frequency component (that is, fs+f1) in a signal, and retain only a low-frequency component (that is, fs-f1) in the signal. The analog signal *X_{I}* may be down-converted to baseband by adjusting a value of f1. For example, f1 is near fs or f1 is equal to fs. In this way, the ADC may perform sampling near f1. It is assumed that a sampling bandwidth is ω, the first ADC 2064 may sample a signal in a frequency range from f1 to f1+ω.

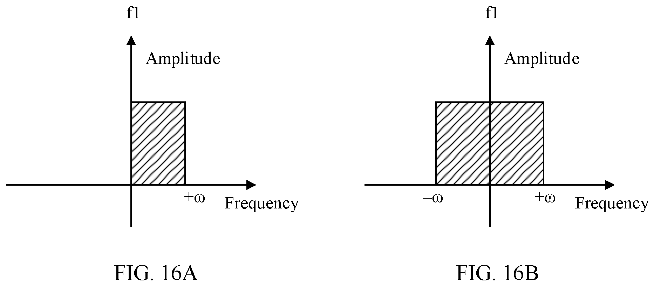

In the foregoing example, the analog signal *X_{I}* is sampled via one ADC. As shown in FIG. 16A, only a signal at the positive frequency (that is, f1 to f1+ω) can be sampled, and a signal at the negative frequency (f1-ω to f1) cannot be sampled. To increase a bandwidth and sample the signal at the negative frequency, as shown in FIG. 15B, the analog signal *X_{I}* may be further sampled via two ADCs, one signal is frequency-mixed by the first frequency mixer 2062, filtered by the first filter 2063, and sampled by the first ADC 2064 in the foregoing example, and is used as an in-phase signal, which is denoted as *X_{I}i*. The other signal is sampled through phase shifting of 90°, and is used as a quadrature signal, which is denoted as *X_{I}q*. The quadrature digital signal *X_{I}q* and the in-phase digital signal *X_{I}i* are used together as the digital signal *X_{I}*.

The radio frequency analog-to-digital converter 206 further includes a 90° phase shifter 2065, a second frequency mixer 2066, a second filter 2067, and a second ADC 2068. The output end of the NCO 2061 is further connected to an input end of the 90° phase shifter 2065, an output end of the 90° phase shifter 2065 is connected to a first input end of the second frequency mixer 2066, a second input end of the second frequency mixer 2066 is connected to an output end of the coherent receiver 207 (for example, an output end through which the coherent receiver 205 outputs an analog signal *X_{I}*), an output end of the second frequency mixer 2066 is connected to an input end of the second filter 2067, an output end of the second filter 2067 is connected to an input end of the second analog-to-digital converter 2068, and an output end of the second analog-to-digital converter 2068 is connected to the frequency band calculation unit 207. The 90° phase shifter 2065 is configured to shift a phase of the radio frequency signal generated by the NCO 2061 by 90°, the second frequency mixer 2066 is configured to perform frequency mixing on the electrical signal output by the coherent receiver 205 and the phase-shifted radio frequency signal; the second filter 2067 is configured to filter out a high-frequency component in a frequency-mixed signal, to convert the electrical signal into baseband, and the second analog-to-digital converter 2068 is configured to convert the baseband-converted electrical signal into a digital signal, where a central sampling frequency of the second analog-to-digital converter 2068 is the first frequency. Then, the analog signal *X_{I}* and the radio frequency signal obtained through phase shifting of 90° are sampled to obtain a quadrature signal, which is denoted as *X_{I}q*. In this way, after the signal *X_{I}i* and the signal *X_{I}q* are obtained through sampling via the two ADCs, the two signals are combined into one signal to obtain *X_{I}i*+*jX_{I}q*. In this way, the complete digital signal *X_{I}* may be obtained. Because the signal *X_{I}i* and the signal *X_{I}q* are digital signals, an operation of combining the two signals into one signal may be obtained through calculation in the frequency band calculation unit.

The two ADCs are set to respectively sample signals at a positive frequency and a negative frequency, so that a sampling bandwidth of the ADC may be doubled. As shown in FIG. 16B, a bandwidth is ω when sampling is performed only at the positive frequency. When the two ADCs are set to perform sampling at the positive frequency and the negative frequency, a sampling frequency range covers f1-ω to f1+ω, and a bandwidth is 2ω. In this way, the sampling bandwidth is doubled, and system precision may be improved.

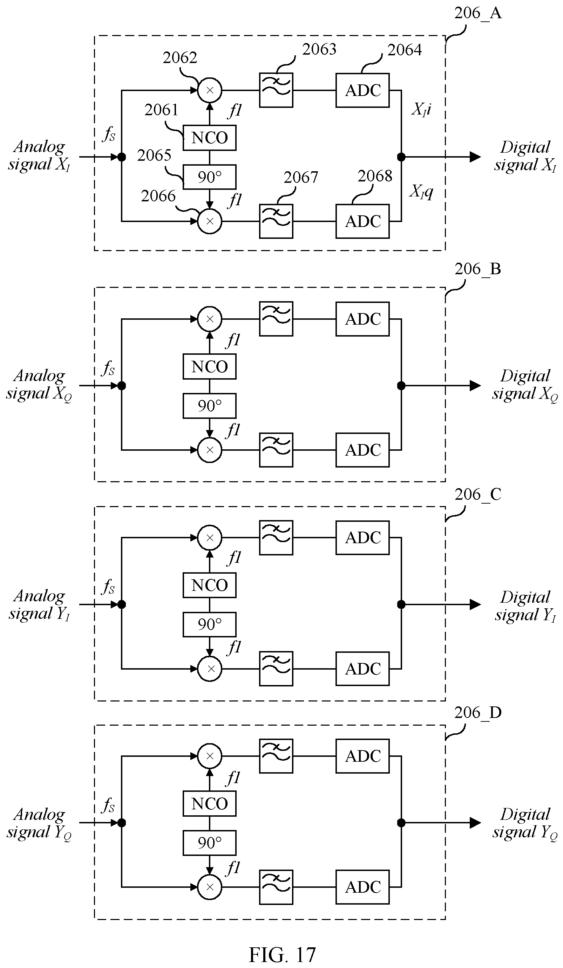

The foregoing describes how to perform down-conversion, sampling, conversion, and the like on the signal *X_{I}*. Because the coherent receiver 205 outputs the four polarization signals *X_{I}*, *X_{Q}*, *Y_{I}*, and *Y_{Q}*, the radio frequency analog-to-digital conversion unit 206 needs to sample and convert the four signals. Refer to FIG. 17, it is equivalent to that four radio frequency analog-to-digital converters 206_A, 206_B, 206_C, and 206_D are disposed. Details are not described in embodiments of this application.

The radio frequency analog-to-digital conversion unit 206 converts the four analog signals *X_{I}*, *X_{Q}*, *Y_{I}*, and *Y_{Q}* into digital signals, and the four digital signals are output to the frequency band calculation unit 207. The frequency band calculation unit 207 performs frequency band calculation based on the four digital signals to obtain a spectrum, where the spectrum includes a first detection signal at a positive frequency and a second detection signal at a negative frequency. The frequency band calculation unit 207 is configured to determine whether a frequency range of the first detection signal and a frequency range of the second detection signal meet an expectation.

For example, the frequency band calculation unit 207 performs Fourier transform and squaring after magnitude taking on the signal *X_{I}* and the signal *X_{Q}* that are quadrature on a complex plane, which is denoted as |*f*(*X_{I}+jX_{Q}*)|² + *jX_{Q}*)|² ; performs Fourier transform, and squaring after magnitude taking on the signal *Y_{I}* and the signal *Y_{Q}* that are quadrature on a complex plane, which is denoted as |*f*(*Y_{I}* + *jY_{Q}*)|² ; and then sums the |*f*(*X_{I}* + *jX_{Q}*)|² and |*f*(*Y_{I}* + *jY_{Q}*)|² to obtain a spectrum: ${\left|f\left({X}_{I}+{jX}_{Q}\right)\right|}^{2} + {\left|f\left({Y}_{I}+{jY}_{Q}\right)\right|}^{2}$

In the foregoing formula, *f*(*x*) represents that Fourier transform is performed on *x*. After Fourier transform is performed on *X_{I}* + *jX_{Q}*, amplitude values of all frequency components may be obtained, and power of all the frequency components is obtained through squaring after magnitude taking. A sum of power of the first polarization state of the signal light and power of the second polarization state of the signal light is a constant value. Therefore, herein, a sum of a value obtained through squaring after magnitude taking after Fourier transform performed on the two quadrature signals in the first polarization state on the complex plane and a value obtained through squaring after magnitude taking after Fourier transform performed on the two quadrature signals in the second polarization state on the complex plane is obtained. In addition, because the signal *X_{I}* and *X_{Q}* are two quadrature signals in the first polarization state of the signal light, and the signal *Y_{I}* and *Y_{Q}* are two quadrature signals in the second polarization state of the signal light, frequency distribution obtained by performing Fourier transform on *X_{I}* + *jX_{Q}* is the same as frequency distribution obtained by performing Fourier transform on *Y_{I}* + *jX_{Q}*. An only difference lies in that intensity of each frequency component may be different. Herein, performing Fourier transform and then squaring after magnitude taking on the signals in the two polarization states to obtain the power is equivalent to averaging the power of the signals in the two polarization states. In this way, after averaging, interference between polarization states can be overcome, the signal is more stable, and system precision can be improved.

The frequency band calculation unit 207 performs frequency band calculation based on the four digital signals to obtain the spectrum, where the spectrum includes frequency distribution of the first detection signal at the positive frequency and frequency distribution of the second detection signal at the negative frequency. The frequency band calculation unit 207 is configured to determine whether a frequency range of the first detection signal and a frequency range of the second detection signal match a preset frequency range. For example, the first detection signal is a φOTDR signal, and the second detection signal is a BOTDR signal. A frequency band width of a first frequency range of the φOTDR signal is about ±10 MHz, and a frequency width of a second frequency range of the BOTDR signal is about ±150 MHz. The frequency band calculation unit 207 determines whether a frequency range of the φOTDR signal matches the first frequency range, that is, determines whether the frequency range of the φOTDR signal is within the first frequency range. The frequency band calculation unit 207 determines whether a frequency range of the BOTDR signal matches the second frequency range, that is, determines whether the frequency range of the BOTDR signal is within the second frequency range. If the frequency range of the first detection signal does not match the first frequency range or the frequency range of the second detection signal does not match the second frequency range, a second frequency (f2) of the first radio frequency signal and the second radio frequency signal generated by the first radio frequency transmitting unit 210 may be adjusted at the signal transmitting apparatus, or a central sampling frequency, namely, a first frequency (f1), of the ADC in the radio frequency analog-to-digital conversion unit 206 may be slightly adjusted, to ensure that both the φOTDR signal and the BOTDR signal are within an ADC collection frequency band.

For example, the signal receiving apparatus further includes a signal quality calculation unit 208. The signal quality calculation unit 208 is configured to determine quality of the BOTDR signal and quality of the φOTDR signal. In a possible implementation, the signal quality may be determined based on some indicators such as fitting precision of the BOTDR signal and phase noise of the φOTDR signal.

For example, when the optical fiber sensing apparatus is initialized, the first radio frequency transmitting unit 210 may scan the second frequency (f2), that is, adjust a value of the second frequency (f2). The signal quality calculation unit 208 is configured to determine fitting precision of the BOTDR signal and phase noise of the φOTDR signal in different values of the second frequency, and then the first radio frequency transmitting unit 210 adjusts the second frequency based on the fitting precision of the BOTDR signal and the phase noise of the φOTDR signal, until the fitting precision of the BOTDR signal and the phase noise of the φOTDR signal are adjusted to meet requirements. A frequency in this case is used as a target frequency. In a subsequent operating process of the optical fiber sensing apparatus, the first radio frequency transmitting unit 210 of the signal transmitting apparatus transmits a first radio frequency signal and a second radio frequency signal at the target frequency, to improve quality of the signal obtained by the signal receiving apparatus.

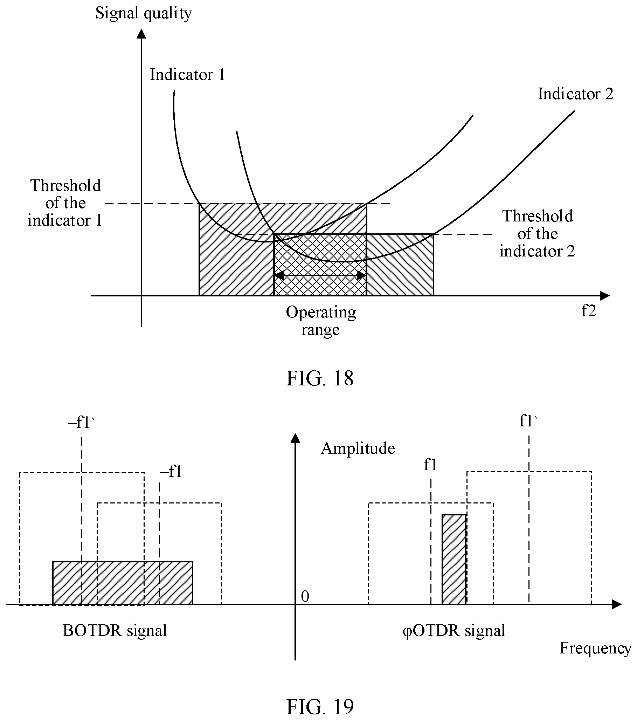

For example, FIG. 18 is a diagram of a relationship, obtained by scanning f2, between f2 and quality of the BOTDR signal and quality of the φOTDR signal. For example, an indicator 1 is fitting precision of the BOTDR signal, and an indicator 2 is phase noise of the OTDR signal. A range of f2 may be selected based on a threshold of the indicator 1, and a range of f2 may be selected based on a threshold of the indicator 2. An intersection of the two ranges is an optional operating range. When f2 is set to a frequency within the operating range, both the indicator 1 and the indicator 2 can meet the requirement.

In some other possible implementations, a width of the optical pulse or a periodicity of the optical pulse may be correspondingly adjusted in the same manner. After an optimal parameter is determined, the optical fiber sensing apparatus may operate on the basis of setting the foregoing parameter, and implement simultaneous detection of vibration, temperature, and stress in an optimal state.

In some possible implementations, the optical fiber under test may be formed by splicing a plurality of different types of optical fibers, and stress on the optical fiber is large, so that a spectrum of the BOTDR signal obtained by the signal receiving apparatus exceeds an ADC frequency band collection range. In this case, the complete BOTDR signal may be detected in a plurality of detection manners, to implement detection in an ultra-large range.

For example, it is assumed that an ADC frequency collection range is 200 MHz, and a frequency range of the BOTDR signal may exceed 300 MHz. Refer to FIG. 19. When a central sampling frequency of the ADC is f1 (or -f1), only the φOTDR signal and a part of the BOTDR signal can be collected, and the BOTDR signal cannot be completely collected. In this way, BOTDR signals that are sampled for a plurality of times are spliced to form the complete BOTDR signal by adjusting the central sampling frequency of the ADC and by performing sampling for the plurality of times. For example, the central sampling frequency of the ADC is adjusted from f1 (-f1) to f1` (or -f1`). When the central sampling frequency of the ADC is adjusted during twice sampling, a specific overlapping area needs to be reserved in ADC frequency collection ranges before and after the adjustment, so that a same part of the signals can be sampled during twice sampling. The same part of the BOTDR signals during twice sampling is used as an anchor, and the BOTDR signals during twice sampling are spliced to obtain the complete BOTDR signal, thereby implementing detection in an ultra-large range.

The frequency band calculation unit 207, the signal quality calculation unit 208, and the like may be implemented via a hardware circuit, for example, an integrated circuit configured to implement the foregoing functions, or the frequency band calculation unit 207, the signal quality calculation unit 208, and the like may be integrated into a calculator, and the foregoing functions are implemented according to a software algorithm.

In the foregoing example, the signal transmitting apparatus adjusts the first radio frequency signal and the second radio frequency signal to one polarization state of the probe light to form a probe light pulse signal, and only a single pulse is used to perform multi-parameter detection. Frequency band control flexibility of a scattered signal of the probe light pulse signal is greatly limited, and the frequency band control flexibility is strongly related to a Brillouin scattering frequency of the optical fiber. The optical fiber sensing apparatus may entirely operate in a frequency band with a low signal-to-noise ratio, which affects system measurement precision. On this basis, this embodiment of this application further provides another implementation, in which multi-parameter detection is performed in a multi-pulse manner.

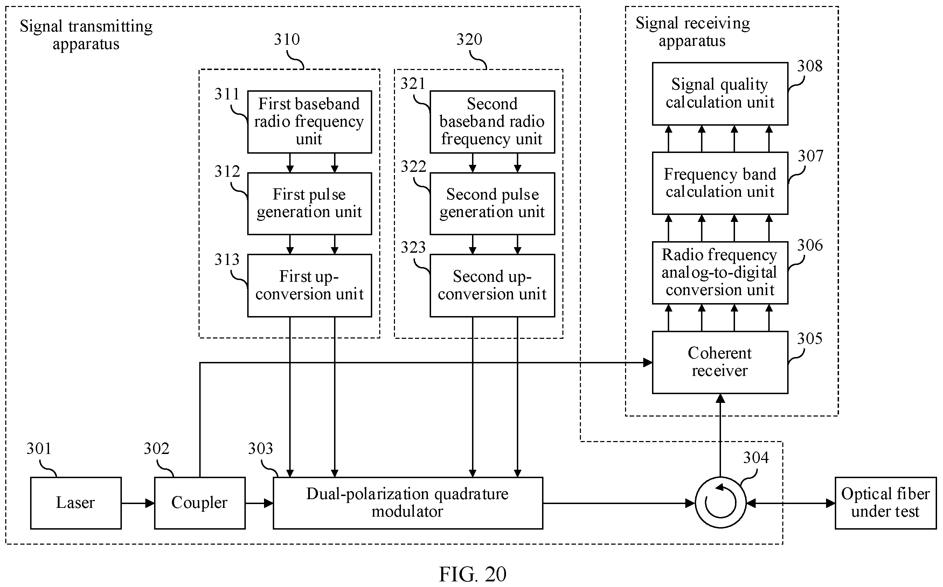

For example, FIG. 20 is a diagram of another optical fiber sensing apparatus according to an embodiment of this application. The optical fiber sensing apparatus includes a signal transmitting apparatus and a signal receiving apparatus. The signal transmitting apparatus includes a laser 301, a coupler 302, a first radio frequency transmitting unit 310, a second radio frequency transmitting unit 320, a dual-polarization quadrature modulator 303, and an optical fiber circulator 304. The signal receiving apparatus includes a coherent receiver 305, a radio frequency analog-to-digital conversion unit 306, a frequency band calculation unit 307, and a signal quality calculation unit 308. Compared with that in the optical fiber sensing apparatus shown in FIG. 6, the signal transmitting apparatus of the optical fiber sensing apparatus shown in FIG. 20 further includes a second radio frequency transmitting unit 320, and other structures are basically the same as those of the optical fiber sensing apparatus shown in FIG. 6. This embodiment of this application is only briefly described. The second radio frequency transmitting unit 320 is configured to generate a third radio frequency signal and a fourth radio frequency signal whose frequencies are a third frequency (f3) and that are quadrature. In this embodiment of this application, probe light output by the quadrature modulator may include a first polarization state and a second polarization state. A first radio frequency signal and a second radio frequency signal may be modulated onto the probe light in the first polarization state, and a third radio frequency signal and a fourth radio frequency signal may be modulated onto the probe light in the second polarization state. The first polarization state and the second polarization state are two quadrature polarization states. Therefore, the quadrature modulator in this embodiment of this application is the dual-polarization quadrature modulator 303.

For example, the second radio frequency transmitting unit 320 includes a second baseband radio frequency unit 321, a second pulse generation unit 322, and a second up-conversion unit 323. The second baseband radio frequency unit 321 is configured to generate two quadrature baseband frequency modulation signals, for example, a third baseband frequency modulation signal and a fourth baseband frequency modulation signal that are quadrature. The third baseband frequency modulation signal may be represented as *yᵢ*, and the fourth baseband frequency modulation signal may be represented as *y_{q} .* For example, *yᵢ* = cos (2*π*Δ*f*₃*t*) and *y_{q}* = sin (2*π*Δ*f*₃*t*)*.*

The second baseband radio frequency unit 321 transmits the generated third baseband frequency modulation signal and fourth baseband frequency modulation signal to the second pulse generation unit 322, the second pulse generation unit 322 generates, based on the third baseband frequency modulation signal, a third baseband pulse frequency modulation signal with a pulse width of τ, and the second pulse generation unit 322 generates, based on the fourth baseband frequency modulation signal, a fourth baseband pulse frequency modulation signal with a pulse width of τ. The third baseband pulse frequency modulation signal may be represented as *yₚᵢ*, and the fourth baseband pulse frequency modulation signal may be represented as *y_{pq}.* For example, ${y}_{pi} = {y}_{i} rect \left(\frac{t}{τ}\right)$ and ${y}_{pq} = {y}_{q} rect \left(\frac{t}{τ}\right)$.

The second up-conversion unit 323 is configured to generate, based on the third baseband pulse frequency modulation signal and the fourth baseband pulse frequency modulation signal, a third radio frequency signal and a fourth radio frequency signal that are quadrature, where the third radio frequency signal may be represented as *s_{yi},* and the fourth radio frequency signal may be represented as *s_{yq},* for example, *s_{yi} = yₚᵢ* cos(2*πf*_{*IF*3}*t*) - *y_{pq}*sin (2*πf*_{*IF*3}*t*) and *S_{yq}* = *yₚᵢ* sin(2*πf*_{*IF*3}*t*) *+ y_{pq}*cos (2*πf*_{*IF*3}*t*)*.* Frequencies of the third radio frequency signal and the fourth radio frequency signal are f3, and f3 *= f_{IF3}* + Δ*f*₃. The frequencies f3 of the third radio frequency signal and the fourth radio frequency signal may be adjusted by adjusting Δ*f*₃ and *f*_{*IF*3}. In a possible implementation, if a frequency of a baseband signal generated by the second baseband radio frequency unit 321 is non-adjustable, Δ*f*₃ in the foregoing example may be zero.

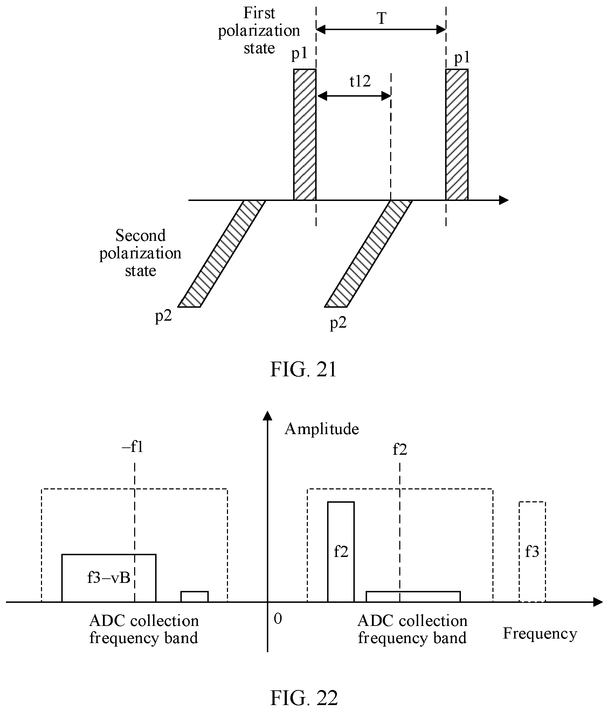

Refer to FIG. 21. The dual-polarization quadrature modulator 303 may modulate the first radio frequency signal and the second radio frequency signal quadrature onto the probe light in the first polarization state, and modulate the third radio frequency signal and the fourth radio frequency signal that are quadrature onto the probe light in the second polarization state to form a probe light pulse signal. Therefore, the dual-polarization quadrature modulator is used for modulation in this embodiment of this application. A pulse periodicity of the probe light pulse is T, and a pulse width is τ. In a possible implementation, a value range of the pulse periodicity T may be 0 to 2000 microseconds, and the pulse width τ may be less than 1000 nanoseconds. For example, τ may be 100 nanoseconds. A delay between a signal sent by the first radio frequency transmitting unit 310 and a signal sent by the second radio frequency transmitting unit 320 is t12, that is, a delay between a pulse in the first polarization state and a pulse in the second polarization state is t12, where t12<T. For example, T may be 500 microseconds, and t12 is 499 microseconds.

For example, for ease of description, a pulse formed by modulating the first radio frequency signal and the second radio frequency signal whose frequencies are f2 onto the probe light in the first polarization state is denoted as p1, and a pulse formed by modulating the third radio frequency signal and the fourth radio frequency signal whose frequencies are f3 onto the probe light in the second polarization state is denoted as p2. Because both p1 and p2 generate backscattered light, signals received by the coherent receiver 305 include a φOTDR signal and a BOTDR signal that are generated from the pulse p1, and further include a φOTDR signal and a BOTDR signal that are generated from the pulse p2. To improve signal quality, the φOTDR signal and the BOTDR signal may be sampled in different polarization states. For example, the φOTDR signal generated from the pulse p1 in the first polarization state may be sampled, and the BOTDR signal generated from the pulse p2 in the second polarization state may be sampled. In this way, system linearity may be improved, and because the two polarization states are independent of each other, frequencies of f2 and f3 may be flexibly adjusted to improve system performance.

For example, in the optical fiber sensing apparatus shown in FIG. 6, the φOTDR signal and the BOTDR signal are generated only from a single-polarized pulse, and a frequency difference between the φOTDR signal and the BOTDR signal is a Brillouin frequency shift vB, which is about 11 GHz. If the BOTDR signal is to be sampled at a negative frequency and the φOTDR signal is to be sampled at a positive frequency via ADCs of a same type, a central sampling frequency of the ADC needs to be near 5.5 GHz. If performance of the ADC near 5.5 GHz is poor, and signal quality is poor, overall detection performance of the optical fiber sensing apparatus is also affected.

However, in the solution provided in this embodiment of this application, the φOTDR signal generated from the pulse p1 is sampled, and the BOTDR signal generated from the pulse p2 is sampled. For example, a frequency of the φOTDR signal generated from the pulse p1 is f2, and a frequency of the BOTDR signal generated from the pulse p2 is about f3-vB. f2 and f3 are adjusted, so that the ADC may sample the φOTDR signal and the BOTDR signal at any central sampling frequency (that is, the first frequency f1). Refer to FIG. 22. The radio frequency analog-to-digital conversion unit 306 performs analog-to-digital conversion on the four signals *X_{I}*, *X_{Q}*, *Y_{I}*, and *Y_{Q}* output by the coherent receiver 305, and then the frequency band calculation unit 307 performs frequency band calculation on the signals to restore a spectrum.

For example, the frequency band calculation unit 307 performs frequency band calculation based on the four digital signals to obtain a spectrum, where the spectrum includes frequency distribution of the first detection signal at the positive frequency and frequency distribution of the second detection signal at the negative frequency. The frequency band calculation unit 307 is further configured to determine whether a frequency range of the first detection signal and a frequency range of the second detection signal meet an expectation.

For example, the first detection signal is a φOTDR signal, and the second detection signal is a BOTDR signal. After performing frequency band calculation, the frequency band calculation unit 307 may obtain a φOTDR signal with a frequency of f2 and a BOTDR signal with a frequency of about f3-vB. However, the φOTDR signal (that is, the φOTDR signal with a frequency of f3) generated from the pulse p2 may be outside an ADC frequency band collection range, and is not sampled. A frequency width of the φOTDR signal is about ±10 MHz, and a frequency width of the BOTDR signal is about ±150 MHz. The frequency band calculation unit 307 determines whether a frequency range of the φOTDR signal is within the range of ±10 MHz, and whether a frequency range of the BOTDR signal is within the range of ±150 MHz. If the frequency is not within the range, the second frequency (f2) of the first radio frequency signal and the second radio frequency signal generated by the first radio frequency transmitting unit 310 may be adjusted, the third frequency (f3) of the third radio frequency signal and the fourth radio frequency signal that are generated by the second radio frequency transmitting unit 320 may be further adjusted, or the central sampling frequency f1 of the ADC in the radio frequency analog-to-digital converter may be further slightly adjusted, to ensure that both the φOTDR signal and the BOTDR signal are within the ADC frequency band collection range.

In this embodiment of this application, the radio frequency analog-to-digital converter samples the φOTDR signal generated from the pulse p1 in the first polarization state and the BOTDR signal generated from the pulse p2 in the second polarization state, and samples the φOTDR signal and the BOTDR signal in different polarization states. In this way, system linearity can be improved. In addition, because the two polarization states are independent of each other, the second frequency and the third frequency can be flexibly adjusted, and frequency distribution of the φOTDR signal and frequency distribution of the BOTDR signal can be changed. For example, in the foregoing example, because the φOTDR signal and the BOTDR signal are generated from a same (polarization state) probe light pulse, to sample the BOTDR signal at a negative frequency and sample the φOTDR signal at a positive frequency via ADCs of a same type, and because a frequency difference between the φOTDR signal and the BOTDR signal is a Brillouin frequency shift vB, a central sampling frequency of the ADC needs to be set near vB/2. However, in this embodiment of this application, the φOTDR signal generated from the pulse p1 is sampled, and the BOTDR signal generated from the pulse p2 is sampled. For example, the φOTDR signal generated from the pulse p1 is f2, and a frequency of the BOTDR signal generated from the pulse p2 is about f3-vB, so that a frequency difference between the φOTDR signal and the BOTDR signal is f2-f3+vB. Therefore, the second frequency and the third frequency may be adjusted, a limitation from the central sampling frequency f1 of the ADC in the radio frequency analog-to-digital converter is canceled (for example, limited to near 5.5 GHz by f1 in the foregoing embodiment), and the central sampling frequency f1 of the ADC may also be adjusted based on a requirement. In this way, system performance can be improved. For example, if sampling performance of the ADC near 5.5 GHz is poor, the ADC may be set to operate near a central sampling frequency of 10 GHz, and then f2 and f3 are adjusted, so that both the φOTDR signal and the BOTDR signal fall within the ADC frequency band collection range.

In some possible implementations, to ensure that the first detection signal can be sampled at the positive frequency and the second detection signal can be sampled at the negative frequency, a value range of the frequency f2 of the first radio frequency signal and the second radio frequency signal may be vB to 0, and a value range of the frequency f3 of the third radio frequency signal and the fourth radio frequency signal may be 0 to vB. For example, f2 may be 4.7 GHz, and f3 may be 6.0 GHz. However, to implement sampling of the φOTDR signal and the BOTDR signal via ADCs of a same type, absolute values of frequencies of the φOTDR signal and the BOTDR signal are close but different.

For example, the optical fiber sensing apparatus further includes a signal quality calculation unit 308. The signal quality calculation unit 308 is configured to determine quality of the BOTDR signal and quality of the φOTDR signal. In a possible implementation, the signal quality may be determined based on some indicators. For example, the indicators may include fitting precision of the BOTDR signal, phase noise of the φOTDR signal, and the like.

For example, when the optical fiber sensing apparatus is initialized, the second radio frequency transmitting unit 320 may scan the frequency f3 and the delay t12, and the signal quality calculation unit 308 is configured to determine the fitting precision of the BOTDR signal and the phase noise of the φOTDR signal in different values of the third frequency (f3) and different values of the delay t12. In this way, the second radio frequency transmitting unit 320 may select a proper third frequency (f3) and a proper delay t12 based on the fitting precision of the BOTDR signal and the phase noise of the φOTDR signal. In a subsequent operating process of the optical fiber sensing apparatus, the third frequency (f3) and the delay t12 of the radio frequency signal sent by the second radio frequency transmitting unit 320 are adjusted, to improve signal quality.

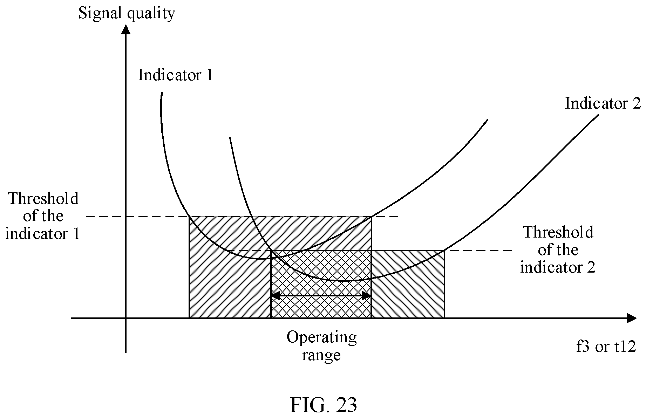

For example, FIG. 23 is a diagram of a relationship, obtained by scanning f3 and t12 by the second radio frequency transmitting unit 320, between f3 or t12 and quality of the BOTDR signal and quality of the φOTDR signal. For example, an indicator 1 is fitting precision of the BOTDR signal, and an indicator 2 is phase noise of the OTDR signal. A range of f3 or t12 may be selected based on a threshold of the indicator 1, and a range of f3 or t12 may be selected based on a threshold of the indicator 2. An intersection of the two ranges is an optional operating range. When f3 or t12 is set within the operating range, the indicator 1 and the indicator 2 can meet the requirement, and quality of the BOTDR signal and quality of the φOTDR signal can be improved. The optical fiber sensing apparatus can implement simultaneous detection of vibration, temperature, and stress in an optimal state.

In the foregoing example, the dual-polarization quadrature modulator modulates the first radio frequency signal and the second radio frequency signal that are quadrature onto the probe light in the first polarization state, and modulates the third radio frequency signal and the fourth radio frequency signal onto the probe light in the second polarization state for detection. In some other possible implementations, the dual-polarization quadrature modulator may further modulate different radio frequency pulses onto the probe light in a same polarization state.

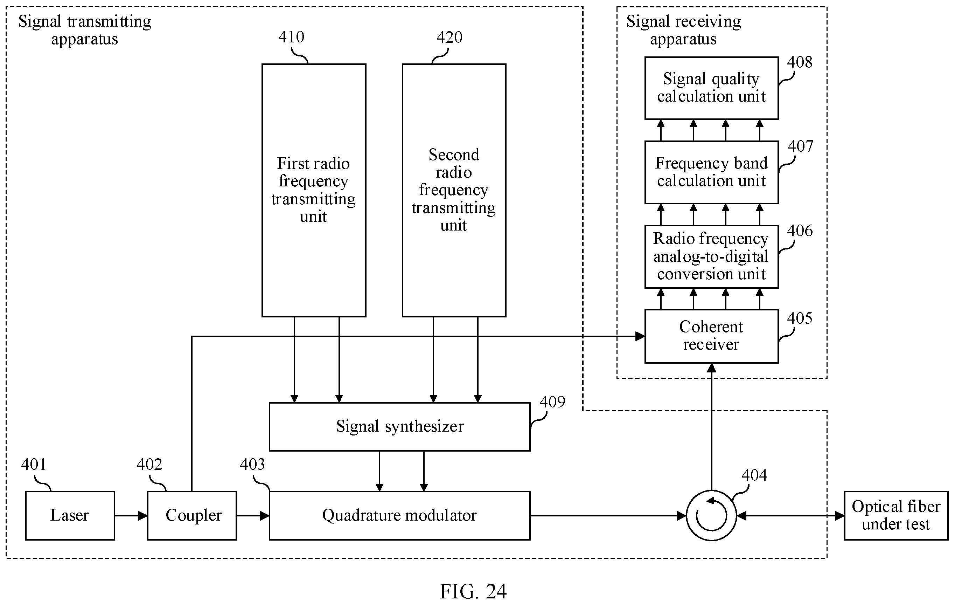

For example, refer to FIG. 24. An embodiment of this application provides another optical fiber sensing apparatus, including a signal transmitting apparatus and a signal receiving apparatus. The signal transmitting apparatus includes a laser 401, a coupler 402, a first radio frequency transmitting unit 410, a second radio frequency transmitting unit 420, a quadrature modulator 403, a signal synthesizer 409, and an optical fiber circulator 404. The signal receiving apparatus includes a coherent receiver 405, a radio frequency analog-to-digital conversion unit 406, a frequency band calculation unit 407, and a signal quality calculation unit 408. Compared with that in the optical fiber sensing apparatus shown in FIG. 20, the signal transmitting apparatus of the optical fiber sensing apparatus provided in this embodiment of this application does not need to use a dual-polarization quadrature modulator for modulation, but uses the quadrature modulator for modulation. However, the signal synthesizer 409 is added, and the signal synthesizer 409 may synthesize two quadrature signals generated by the first radio frequency transmitting unit and two quadrature signals generated by the second radio frequency transmitting unit, and then the quadrature modulator 403 modulates the synthesized radio frequency signal onto probe light in a same polarization state. In this way, an effect similar to that of modulating to a dual-polarization state can also be achieved.

The optical fiber sensing apparatus provided in this embodiment of this application receives, via the coherent receiver, the signal light including the φOTDR signal and the BOTDR signal, and the coherent receiver obtains the two analog electrical signals (*X_{I}* and *X_{Q}*) in the first polarization state of the signal light and the two analog electrical signals (*Y_{I}* and *Y_{Q}*) in the second polarization state of the signal light based on the local oscillator light and the signal light, the radio frequency analog-to-digital converter performs down conversion and analog-to-digital conversion on the four analog electrical signals, to output two digital electrical signals (*X_{I}*, *X_{Q}*) corresponding to the first polarization state of the signal light and two digital signals (*Y_{I}*, *Y_{Q}*) corresponding to the second polarization state of the signal light, where each polarization state herein includes an in-phase (in-phase, I) signal and a quadrature (quadrature, Q) signal. A spectrum obtained by performing Fourier transform and squaring after magnitude taking on the I signal and the Q signal in each polarization state on a complex plane includes a first detection signal at a positive frequency and a second detection signal at a negative frequency. For example, the first detection signal is a φOTDR signal, and the second detection signal is a BOTDR signal; or the first detection signal is a BOTDR signal, and the second detection signal is a φOTDR signal. Based on this, the second frequency (f2) of the first radio frequency signal and the second radio frequency signal is adjusted at the signal transmitting apparatus, or the third frequency (f3) of the third radio frequency signal and the fourth radio frequency signal is adjusted, so that frequencies of the first detection signal and the second detection signal are distributed near a central sampling frequency (that is, the first frequency (f1)) of the ADC. In this way, the first detection signal and the second detection signal may be sampled at the negative frequency and at the positive frequency respectively via ADCs of a same type, so that a set of transceiver apparatuses can receive the BOTDR signal and the φOTDR signal, to monitor a plurality of parameters such as vibration, temperature, and strain. In addition, the first detection signal is sampled at the positive frequency and the second detection signal is sampled at the negative frequency respectively via ADCs of a same type, so that a requirement on frequency coverage of the coherent receiver, the ADC, and the like of the signal receiving apparatus can be reduced.

The optical fiber sensing apparatus can be applied to many scenarios, including buried optical fiber intrusion alarm, underground monitoring, bridge health monitoring, urban pipeline corridor monitoring, oil and gas leakage detection, and cable ice-covering detection. In the foregoing scenario, a plurality of parameters of vibration, temperature, and stress are simultaneously detected, so that an applicable scenario, detection precision, and positioning precision of an optical fiber sensing system can be effectively improved.

For example, in the buried pipeline intrusion alarm scenario, because a temperature difference of regions where pipelines are located may reach more than 30 degrees, positioning precision of the intrusion alarm may be biased. The apparatus may simultaneously detect vibration and temperature, to compensate for a positioning error caused by the temperature difference. In the oil and gas leakage and pipeline corridor monitoring scenarios, leakage of transportation gas such as liquefied gas and gas may cause a temperature change near a leakage point and synchronously introduce acoustic parameters such as hole noise and a negative pressure wave. Sensitivity of pipeline leakage detection can be effectively improved by simultaneously detecting the temperature and vibration. During bridge health monitoring and cable ice-covering monitoring, values of static stress on a bridge and a cable can be detected to determine whether the cable or the bridge is in a health operating state. In addition, wind dancing of the cable and bridge resonance can be detected by detecting low-frequency vibration. In the underground survey scenario, distributed detection is performed on underground vibration waves generated by an active excitation source to extract components and structure information in different underground depths. In addition, a formation temperature profile can be obtained through temperature detection to provide guidance information for underground mining.

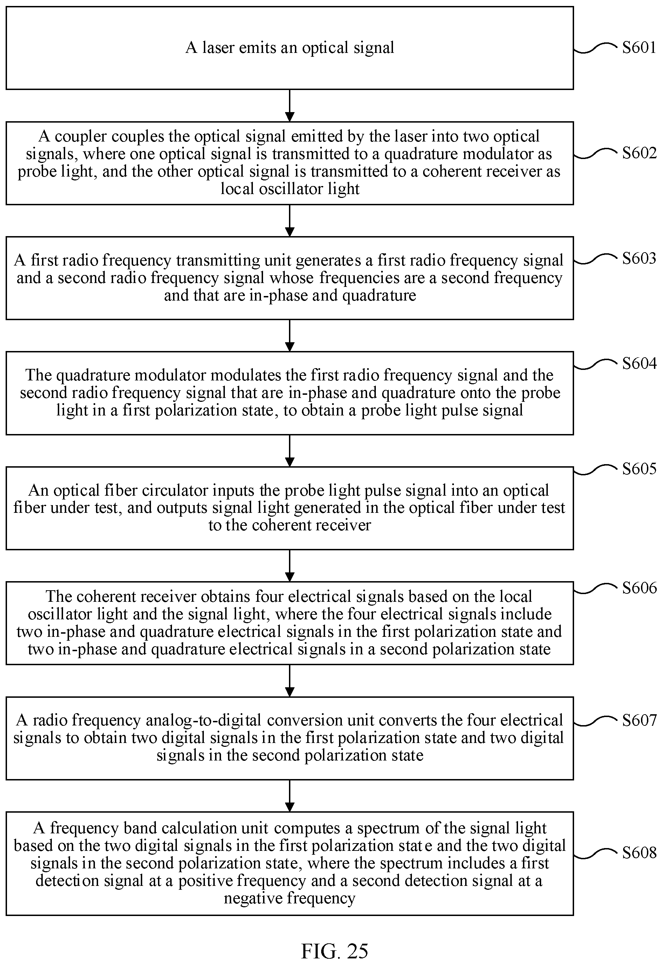

FIG. 25 is an operating flowchart of a signal processing method applied to an optical fiber sensing apparatus according to an embodiment of this application. The following steps are included.

S601: A laser emits an optical signal.

S602: A coupler couples the optical signal emitted by the laser into two optical signals, where one optical signal is transmitted to a quadrature modulator as probe light, and the other optical signal is transmitted to a coherent receiver as local oscillator light.

S603: A first radio frequency transmitting unit generates a first radio frequency signal and a second radio frequency signal whose frequencies are a second frequency and that are quadrature.

S604: The quadrature modulator modulates the first radio frequency signal and the second radio frequency signal that are quadrature onto probe light in a first polarization state, to obtain a probe light pulse signal.

S605: An optical fiber circulator inputs the probe light pulse signal into an optical fiber under test, and outputs signal light generated in the optical fiber under test to the coherent receiver.

S606: The coherent receiver obtains four electrical signals based on the local oscillator light and the signal light, where the four electrical signals include two quadrature electrical signals in the first polarization state of the signal light and two quadrature electrical signals in a second polarization state of the signal light.

S607: A radio frequency analog-to-digital conversion unit converts the four quadrature electrical signals to obtain two digital signals in the first polarization state of the signal light and two digital signals in the second polarization state of the signal light.

S608: A frequency band calculation unit computes a spectrum of the signal light based on the two digital signals in the first polarization state of the signal light and the two digital signals in the second polarization state of the signal light, where the spectrum includes a first detection signal at a positive frequency and a second detection signal at a negative frequency.

In a possible implementation, with reference to FIG. 15A, S607 includes the following.

A numerically controlled oscillator generates a radio frequency signal at a first frequency, the first frequency mixer is configured to perform frequency mixing on an electrical signal output by the coherent receiver and the radio frequency signal whose frequency is the first frequency, the first filter filters out a high-frequency component in a frequency-mixed signal, to convert the electrical signal into baseband, and the first analog-to-digital converter converts, into a digital signal, the electrical signal converted into baseband, where the first frequency is a central sampling frequency of the first analog-to-digital converter.

In another possible implementation, with reference to FIG. 15B, S607 includes the following.

The numerically controlled oscillator generates the radio frequency signal at the first frequency, the first frequency mixer is configured to perform frequency mixing on the electrical signal output by the coherent receiver and the radio frequency signal whose frequency is the first frequency, the first filter filters out the high-frequency component in the signal obtained through frequency mixing, to convert the electrical signal into baseband; and the first analog-to-digital converter converts the electrical signal converted into baseband to obtain a same in-phase digital signal. A 90° phase shifter shifts a phase of the radio frequency signal at the first frequency by 90°. A second frequency mixer performs frequency mixing on the phase-shifted radio frequency signal and the electrical signal output by the coherent receiver. A second filter filters out a high-frequency component in a frequency-mixed signal, to convert the electrical signal into baseband. A second analog-to-digital converter converts the electrical signal converted into baseband to obtain a quadrature digital signal.

In some possible implementations, to cause frequency distribution of the first detection signal and frequency distribution of the second signal that are obtained by the signal receiving apparatus to fall within a sampling range of the ADC, the method further includes:
S609A: When a frequency range of the first detection signal does not match a first frequency range, or when a frequency range of the second detection signal does not match a second frequency range, the first radio frequency transmitting unit is configured to adjust the second frequency, and/or the radio frequency analog-to-digital converter is configured to adjust the first frequency.
S609B: The first radio frequency transmitting unit adjusts the second frequency when an absolute value of a frequency range of the first detection signal overlaps an absolute value of a frequency range of the second detection signal.

In some possible implementations, the signal transmitting apparatus further includes a second radio frequency transmitting unit. The second radio frequency transmitting unit may transmit a third radio frequency signal and a fourth radio frequency signal whose frequencies are a third frequency and that are quadrature. The quadrature modulator may adjust the third radio frequency signal and the fourth radio frequency signal to the probe light in the second polarization state. In this case, to adjust quality of the signal received by the signal receiving apparatus, the method further includes:
S609C: The second radio frequency transmitting unit adjusts, based on fitting precision of a BOTDR signal and/or phase noise of a φOTDR signal, a value of the third frequency and a delay between a signal transmitted by the second radio frequency transmitting unit and a signal transmitted by the first radio frequency transmitting unit.

It should be noted that S609A, S609B, and S609C may be simultaneously performed, or only a part of S609A, S609B, and S609C may be performed, and may be adjusted based on an actual requirement in an operation project of the optical fiber sensing apparatus.

In the foregoing example, the frequency band calculation unit, the signal quality calculation unit, and the like may be implemented via a hardware circuit, for example, an integrated circuit configured to implement the foregoing functions, or the frequency band calculation unit, the signal quality calculation unit, and the like may be integrated into a calculator, and the foregoing functions are implemented according to a software algorithm. The first radio frequency signal transmitting unit, the second radio frequency signal transmitting unit, and the like may be implemented by using a structure, for example, a signal generator.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal receiving apparatus, wherein the signal receiving apparatus comprises a coherent receiver, a radio frequency analog-to-digital conversion unit, and a frequency band calculation unit;
the coherent receiver is configured to obtain four electrical signals based on local oscillator light and signal light generated in an optical fiber under test, wherein the four electrical signals comprise two in-phase and quadrature electrical signals in a first polarization state and two in-phase and quadrature electrical signals in a second polarization state;
the radio frequency analog-to-digital conversion unit is configured to convert the four electrical signals to obtain two digital signals in the first polarization state and two digital signals in the second polarization state; and
the frequency band calculation unit is configured to compute a spectrum of the signal light based on the two digital signals in the first polarization state and the two digital signals in the second polarization state, wherein the spectrum comprises a first detection signal at a positive frequency and a second detection signal at a negative frequency.

2. The signal receiving apparatus according to claim 1, wherein the coherent receiver comprises four output ends, the radio frequency analog-to-digital conversion unit comprises four radio frequency analog-to-digital converters, and the four radio frequency analog-to-digital converters are connected to the four output ends of the coherent receiver in one-to-one correspondence;
the radio frequency analog-to-digital converter comprises a numerically controlled oscillator, a first frequency mixer, a first filter, and a first analog-to-digital converter, an output end of the numerically controlled oscillator is connected to a first input end of the first frequency mixer, a second input end of the first frequency mixer is connected to an output end of the coherent receiver, an output end of the first frequency mixer is connected to an input end of the first filter, an output end of the first filter is connected to an input end of the first analog-to-digital converter, and an output end of the first analog-to-digital converter is connected to the frequency band calculation unit; and
the numerically controlled oscillator is configured to generate a radio frequency signal at a first frequency, the first frequency mixer is configured to perform frequency mixing on one electrical signal output by the coherent receiver and the radio frequency signal, the first filter is configured to filter out a high-frequency component in a frequency-mixed signal, to convert the electrical signal into baseband, and the first analog-to-digital converter is configured to convert the baseband-converted electrical signal into a digital signal, wherein a central sampling frequency of the first analog-to-digital converter is the first frequency.

3. The signal receiving apparatus according to claim 2, wherein the radio frequency analog-to-digital converter further comprises a 90° phase shifter, a second frequency mixer, a second filter, and a second analog-to-digital converter;
the output end of the numerically controlled oscillator is further connected to an input end of the 90° phase shifter, an output end of the 90° phase shifter is connected to a first input end of the second frequency mixer, a second input end of the second frequency mixer is connected to the output end of the coherent receiver, an output end of the second frequency mixer is connected to an input end of the second filter, an output end of the second filter is connected to an input end of the second analog-to-digital converter, and an output end of the second analog-to-digital converter is connected to the frequency band calculation unit; and
the numerically controlled oscillator is configured to generate the radio frequency signal at the first frequency, the 90° phase shifter is configured to shift a phase of the radio frequency signal by 90°, the frequency mixer is configured to perform frequency mixing on the electrical signal output by the coherent receiver and the phase-shifted radio frequency signal, the second filter is configured to filter out a high-frequency component in a frequency-mixed signal, to convert the electrical signal into baseband, and the second analog-to-digital converter is configured to convert the baseband-converted electrical signal into a digital signal, wherein a central sampling frequency of the second analog-to-digital converter is the first frequency.

4. The signal receiving apparatus according to any one of claims 1 to 3, wherein the first detection signal is a phase-sensitive optical time-domain reflectometer φOTDR signal, and the second detection signal is a Brillouin optical time-domain reflectometer BOTDR signal.

5. The signal receiving apparatus according to any one of claims 1 to 4, wherein the first detection signal and the second detection signal are detection signals generated through scattering of a same probe light pulse, or the first detection signal and the second detection signal are detection signals generated from different probe light pulses.

6. The signal receiving apparatus according to claim 4, wherein the signal receiving apparatus further comprises a signal quality calculation unit, and the signal quality calculation unit is configured to determine fitting precision of the BOTDR signal and phase noise of the φOTDR signal.

7. A signal transmitting apparatus, wherein the signal transmitting apparatus comprises a laser, a coupler, a first radio frequency transmitting unit, a quadrature modulator, and an optical fiber circulator;
the laser is configured to emit an optical signal, wherein the optical signal emitted by the laser is coupled into two optical signals by the coupler, one optical signal is transmitted to the quadrature modulator as probe light, and the other optical signal is transmitted to a coherent receiver as local oscillator light;
the first radio frequency transmitting unit is configured to generate a first radio frequency signal and a second radio frequency signal whose frequencies are a second frequency and that are in-phase and quadrature;
the quadrature modulator is configured to modulate the first radio frequency signal and the second radio frequency signal that are in-phase and quadrature onto the probe light in a first polarization state, to obtain a probe light pulse signal; and
the optical fiber circulator is configured to connect an optical fiber under test, the optical fiber circulator is configured to input the probe light pulse signal into the optical fiber under test, and the optical fiber circulator is further configured to output signal light generated in the optical fiber under test.

8. The signal transmitting apparatus according to claim 7, wherein the signal transmitting apparatus further comprises a second transmitting unit;
the second radio frequency transmitting unit is configured to generate a third radio frequency signal and a fourth radio frequency signal whose frequencies are a third frequency and that are in-phase and quadrature; and
the quadrature modulator is further configured to modulate the third radio frequency signal and the fourth radio frequency signal that are in-phase and quadrature onto the probe light in a second polarization state.

9. The signal transmitting apparatus according to claim 7 or 8, wherein the first radio frequency transmitting unit is further configured to adjust a value of the second frequency.

10. The signal transmitting apparatus according to claim 8, wherein the second radio frequency transmitting unit is further configured to adjust a value of the third frequency and a delay between a signal transmitted by the second radio frequency transmitting unit and a signal transmitted by the first radio frequency transmitting unit.

11. An optical fiber sensing apparatus, wherein the optical fiber sensing apparatus comprises: a laser, a coupler, a first radio frequency transmitting unit, a quadrature modulator, an optical fiber circulator, a coherent receiver, a frequency band calculation unit, and a radio frequency analog-to-digital conversion unit;
an optical signal emitted by the laser is coupled into two optical signals by the coupler, one optical signal is transmitted to the quadrature modulator as probe light, and the other optical signal is transmitted to the coherent receiver as local oscillator light;
the first radio frequency transmitting unit is configured to generate a first radio frequency signal and a second radio frequency signal whose frequencies are a second frequency and that are in-phase and quadrature;
the quadrature modulator is configured to modulate the first radio frequency signal and the second radio frequency signal that are in-phase and quadrature onto the probe light in a first polarization state, to obtain a probe light pulse signal;
the optical fiber circulator is configured to connect an optical fiber under test, the optical fiber circulator is configured to input the probe light pulse signal into the optical fiber under test, and the optical fiber circulator is further configured to output signal light generated in the optical fiber under test to the coherent receiver;
the coherent receiver is configured to obtain four electrical signals based on the local oscillator light and the signal light generated in the optical fiber under test, wherein the four electrical signals comprise two in-phase and quadrature electrical signals in the first polarization state and two in-phase and quadrature electrical signals in a second polarization state;
the radio frequency analog-to-digital conversion unit is configured to convert the four electrical signals to obtain two digital signals in the first polarization state and two digital signals in the second polarization state; and
the frequency band calculation unit is configured to compute a spectrum of the signal light based on the two digital signals in the first polarization state and the two digital signals in the second polarization state, wherein the spectrum comprises a first detection signal at a positive frequency and a second detection signal at a negative frequency.

12. The optical fiber sensing apparatus according to claim 11, wherein the coherent receiver comprises four output ends, the radio frequency analog-to-digital conversion unit comprises four radio frequency analog-to-digital converters, the four radio frequency analog-to-digital converters are connected to the four output ends of the coherent receiver in one-to-one correspondence, and the radio frequency analog-to-digital converter comprises a numerically controlled oscillator, a first frequency mixer, a first filter, and a first analog-to-digital converter;
an output end of the numerically controlled oscillator is connected to a first input end of the first frequency mixer, a second input end of the first frequency mixer is connected to an output end of the coherent receiver, an output end of the first frequency mixer is connected to an input end of the first filter, an output end of the first filter is connected to an input end of the first analog-to-digital converter, and an output end of the first analog-to-digital converter is connected to the frequency band calculation unit; and
the numerically controlled oscillator is configured to generate a radio frequency signal at a first frequency, the first frequency mixer is configured to perform frequency mixing on one electrical signal output by the coherent receiver and the radio frequency signal, the first filter is configured to filter out a high-frequency component in a frequency-mixed signal, to convert the electrical signal into baseband, and the first analog-to-digital converter is configured to convert the baseband-converted electrical signal into a digital signal, wherein a central sampling frequency of the first analog-to-digital converter is the first frequency.

13. The optical fiber sensing apparatus according to claim 11 or 12, wherein the radio frequency analog-to-digital converter further comprises a 90° phase shifter, a second filter, and a second analog-to-digital converter;
the output end of the numerically controlled oscillator is further connected to an input end of the 90° phase shifter, an output end of the 90° phase shifter is connected to a first input end of the second frequency mixer, a second input end of the second frequency mixer is connected to the output end of the coherent receiver, an output end of the second frequency mixer is connected to an input end of the second filter, an output end of the second filter is connected to an input end of the second analog-to-digital converter, and an output end of the second analog-to-digital converter is connected to the frequency band calculation unit; and
the numerically controlled oscillator is configured to generate the radio frequency signal at the first frequency, the 90° phase shifter is configured to shift a phase of the radio frequency signal by 90°, the frequency mixer is configured to perform frequency mixing on the electrical signal output by the coherent receiver and the phase-shifted radio frequency signal, the second filter is configured to filter out a high-frequency component in a frequency-mixed signal, to convert the electrical signal into baseband, and the second analog-to-digital converter is configured to convert the baseband-converted electrical signal into a digital signal, wherein a central sampling frequency of the second analog-to-digital converter is the first frequency.

14. The optical fiber sensing apparatus according to any one of claims 11 to 13, wherein the first detection signal is a phase-sensitive optical time-domain reflectometer φOTDR signal, and the second detection signal is a Brillouin optical time-domain reflectometer BOTDR signal.

15. The optical fiber sensing apparatus according to any one of claims 11 to 14, wherein the first detection signal and the second detection signal are detection signals generated through scattering of a pulse in the first polarization state of the probe light.

16. The optical fiber sensing apparatus according to any one of claims 11 to 14, wherein the signal transmitting apparatus further comprises a second transmitting unit;
the second radio frequency transmitting unit is configured to generate a third radio frequency signal and a fourth radio frequency signal whose frequencies are a third frequency and that are in-phase and quadrature;
the quadrature modulator is further configured to modulate the third radio frequency signal and the fourth radio frequency signal that are in-phase and quadrature onto the probe light in the second polarization state; and
the frequency band calculation unit is configured to compute the spectrum of the signal light based on the two digital signals in the first polarization state and the two digital signals in the second polarization state, wherein the spectrum comprises the first detection signal at the positive frequency and the second detection signal at the negative frequency, the first detection signal is a detection signal generated through scattering of a pulse in the first polarization state of the probe light, and the second detection signal is a detection signal generated through scattering of a pulse in the second polarization state of the probe light.

17. The optical fiber sensing apparatus according to any one of claims 11 to 16, wherein when a frequency range of the first detection signal does not match the first frequency range, or when a frequency range of the second detection signal does not match a second frequency range, the first radio frequency transmitting unit is configured to adjust the second frequency, and/or the radio frequency analog-to-digital converter is configured to adjust the first frequency.

18. The optical fiber sensing apparatus according to any one of claims 11 to 16, wherein the first radio frequency transmitting unit is further configured to adjust the second frequency when an absolute value of a frequency range of the first detection signal overlaps an absolute value of a frequency range of the second detection signal.

19. The optical fiber sensing apparatus according to any one of claims 16 to 18, wherein the first detection signal is the phase-sensitive optical time-domain reflectometer φOTDR signal, the second detection signal is the Brillouin optical time-domain reflectometer BOTDR signal, the optical fiber sensing apparatus further comprises a signal quality calculation unit, and the signal quality calculation unit is configured to determine fitting precision of the BOTDR signal and phase noise of the φOTDR signal.

20. The optical fiber sensing apparatus according to claim 19, wherein the second radio frequency transmitting unit is further configured to: adjust, based on the fitting precision of the BOTDR signal and/or the phase noise of the φOTDR signal, a value of the third frequency and a delay between a signal transmitted by the second radio frequency transmitting unit and a signal transmitted by the first radio frequency transmitting unit.

21. A signal processing method, wherein the method is applied to the optical fiber sensing apparatus according to any one of claims 11 to 20, and the method comprises:
emitting, by the laser, the optical signal;
coupling, by the coupler, the optical signal emitted by the laser into the two optical signals, wherein the optical signal is transmitted to the quadrature modulator as the probe light, and the other optical signal is transmitted to the coherent receiver as the local oscillator light;
generating, by the first radio frequency transmitting unit, the first radio frequency signal and the second radio frequency signal whose frequencies are the second frequency and that are in-phase and quadrature;
modulating, by the quadrature modulator, the first radio frequency signal and the second radio frequency signal that are in-phase and quadrature onto the probe light in the first polarization state, to obtain the probe light pulse signal;
inputting, by the optical fiber circulator, the probe light pulse signal into the optical fiber under test, and outputting the signal light generated in the optical fiber under test to the coherent receiver;
obtaining, by the coherent receiver, the four electrical signals based on the local oscillator light and the signal light, wherein the four electrical signals comprise the two in-phase and quadrature electrical signals in the first polarization state and the two in-phase and quadrature electrical signals in the second polarization state;
converting, by the radio frequency analog-to-digital conversion unit, the four electrical signals to obtain the two digital signals in the first polarization state and the two digital signals in the second polarization state; and
computing, by the frequency band calculation unit, the spectrum of the signal light based on the two digital signals in the first polarization state and the two digital signals in the second polarization state, wherein the spectrum comprises the first detection signal at the positive frequency and the second detection signal at the negative frequency.

22. The signal processing method according to claim 21, wherein the method further comprises:
when the frequency range of the first detection signal does not match the first frequency range, or when the frequency range of the second detection signal does not match the second frequency range, adjusting, by the first radio frequency transmitting unit, the second frequency, and/or adjusting, by the radio frequency analog-to-digital converter, the first frequency.

23. The signal processing method according to claim 21, wherein the method further comprises:
adjusting, by the first radio frequency transmitting unit, the second frequency when the absolute value of the frequency range of the first detection signal overlaps the absolute value of the frequency range of the second detection signal.

24. The signal processing method according to claim 21, wherein the method further comprises:
adjusting, by the second radio frequency transmitting unit based on the fitting precision of the BOTDR signal and/or the phase noise of the φOTDR signal, the value of the third frequency and the delay between the signal transmitted by the second radio frequency transmitting unit and the signal transmitted by the first radio frequency transmitting unit.
